(19) Europäisches Patentamt / European Patent Office / Office européen des brevets

(11) EP 4 467 586 A1

(12) EUROPÄISCHE PATENTANMELDUNG

(43) Veröffentlichungstag:
**27.11.2024 Patentblatt 2024/48**

(21) Anmeldenummer: **23175389.8**

(22) Anmeldetag: **25.05.2023**

(51) Internationale Patentklassifikation (IPC):
***C08G 18/12*** (2006.01) ***C08G 18/08*** (2006.01)
***C08G 18/28*** (2006.01) ***C08G 18/32*** (2006.01)
***C08G 18/34*** (2006.01) ***C08G 18/42*** (2006.01)
***C08G 18/72*** (2006.01) ***C08G 18/79*** (2006.01)
***C08L 75/02*** (2006.01) ***C08L 75/04*** (2006.01)
***C08L 75/06*** (2006.01) ***C09J 175/02*** (2006.01)
***C09J 175/06*** (2006.01)

(52) Gemeinsame Patentklassifikation (CPC):
(C-Sets verfügbar)
**C08G 18/12; C08G 18/0823; C08G 18/0828; C08G 18/283; C08G 18/3206; C08G 18/3275; C08G 18/348; C08G 18/4238; C08G 18/722; C08G 18/797; C08L 75/02; C08L 75/04; C08L 75/06; C09J 175/02; C09J 175/06;** (Forts.)

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**
Benannte Erstreckungsstaaten:
**BA**
Benannte Validierungsstaaten:
**KH MA MD TN**

(71) Anmelder: **Covestro Deutschland AG**
**51373 Leverkusen (DE)**

(72) Erfinder:
- **Thiebes, Christoph**
  **51061 Köln (DE)**
- **Fait, Thomas**
  **51063 Köln (DE)**
- **Arndt, Wolfgang**
  **41542 Dormagen (DE)**
- **Weikard, Jan**
  **51375 Leverkusen (DE)**
- **Fan, Zhirong**
  **40764 Langenfeld (DE)**

(74) Vertreter: **Levpat**
**c/o Covestro AG**
**Gebäude K12**
**51365 Leverkusen (DE)**

# (54) VERWENDUNG VON POLYURETHAN-DISPERSIONEN ZUR HERSTELLUNG VON LATENT-REAKTIVEN KLEBSTOFF-SCHICHTEN UND SELBSTTRAGENDEN KLEBSTOFFFILMEN

(57) Die vorliegende Erfindung betrifft die Verwendung einer wässrigen Dispersion zur Herstellung von lagerstabilen und latent-reaktiven Klebstoffen, wobei die wässrige Dispersion mindestens die folgenden dispergierten Komponenten enthält: (A) mindestens ein teilkristallines oder kristallines Carboxylgruppen enthaltendes Polyurethanpolymer, welches eine Schmelztemperatur im Bereich von 35 bis 80 °C, eine Schmelzenthalpie von ≥ 15 J/g und eine partielle Säurezahl im Bereich von 0,8 mg KOH / g bis 25 mg KOH /g aufweist; (B) mindestens ein Polycarbodiimid , mindestens ein Polyaziridin und/oder eine Mischung davon, wobei das mindestens eine Polycarbodiimid und das mindestens eine Polyaziridin eine Glasübergangstemperatur im Bereich von -150 °C bis 30 °C aufweist; (C) gegebenenfalls mindestens ein weiteres Polymer, welches von dem mindestens einen Polymer (A) verschieden ist, und (D) gegebenenfalls mindestens einen Zusatzstoff der von den Komponenten (A), (B) und (C) verschieden ist. Weiterhin ein Verfahren zum Verbinden von mindestens zwei Substraten oder mindestens zwei Oberflächenbereichen eines Substrates und einen Klebstoffverbund.

EP 4 467 586 A1

(52) Gemeinsame Patentklassifikation (CPC): (Forts.)
C08G 2170/80

C-Sets
**C08G 18/12, C08G 18/3275**

## Beschreibung

Die vorliegende Erfindung betrifft die Verwendung einer wässrigen Dispersion zur Herstellung von lagerstabilen und latent-reaktiven Klebstoffen, wobei die wässrige Dispersion mindestens die folgenden dispergierten Komponenten enthält: (A) mindestens ein teilkristallines oder kristallines Carboxylgruppen enthaltendes Polyurethanpolymer, welches eine Schmelztemperatur im Bereich von 35 bis 80 °C, eine Schmelzenthalpie von ≥ 15 J/g und eine partielle Säurezahl im Bereich von 0,8 mg KOH / g bis 25 mg KOH /g aufweist; (B) mindestens ein Polycarbodiimid , mindestens ein Polyaziridin und/oder eine Mischung davon, wobei das mindestens eine Polycarbodiimid und das mindestens eine Polyaziridin eine Glasübergangstemperatur im Bereich von -150 °C bis 30 °C aufweist; (C) gegebenenfalls mindestens ein weiteres Polymer, welches von dem mindestens einen Polymer (A) verschieden ist; und (D) gegebenenfalls mindestens einen Zusatzstoff der von den Komponenten (A), (B) und (C) verschieden ist. Weiterhin ein Verfahren zum Verbinden von mindestens zwei Substraten oder mindestens zwei Oberflächenbereichen eines Substrates und einen Klebstoffverbund.

Klebstoffe auf Basis von wässrigen Polyurethan-Dispersionen haben sich weltweit in anspruchsvollen industriellen Anwendungen etabliert, zum Beispiel bei der Schuhfertigung, beim Kleben von Möbelteilen, beim Kleben von Teilen für die KFZ-Innenausstattung, der Folienlaminierung oder der Klebung von textilen Substraten. Die Herstellung wässriger Polyurethan bzw. Polyurethan-Polyhamstoff-Dispersionen ist bekannt.

Bei der Verwendung solcher Dispersionen zum Kleben von Substraten wird häufig nach dem Thermoaktivierverfahren gearbeitet. Hierbei wird die Dispersion auf das Substrat aufgebracht, und nach vollständiger Verdunstung des Wassers wird die Klebstoffschicht durch Erwärmen, z. B. mit einem Infrarotstrahler, aktiviert und in einen klebfähigen Zustand überführt. Die Temperatur, bei der der Klebstofffilm klebrig wird, bezeichnet man als Aktiviertemperatur. Die in diesem Verfahren verwendeten Klebstoffe enthalten in vielen Fällen kristalline Anteile, die bei oder oberhalb der Aktiviertemperatur in geschmolzener Form vorliegen.

Klebstoffe auf Basis von wässrigen Polyurethan- bzw. Polyurethan-Polyhamstoff-Dispersionen, welche für die Anwendung des Thermoaktivierverfahrens geeignet sind, werden in der US-A 4 870 129 beschrieben. Danach können durch Verwendung spezieller Mischungen von Diisocyanaten und Polyolkomponenten nach dem Acetonverfahren wässrige Polyurethan- bzw. Polyurethan-Polyhamstoff-Dispersionen erhalten werden. Die daraus erhältlichen Filme weisen eine gute Aktivierbarkeit auf.

Bei der Verwendung von Polyurethan- bzw. Polyurethan-PolyharnstoffDispersionen kann aber auch nach dem Verfahren der Nassverklebung gearbeitet werden, d.h. die Durchführung der Verklebung erfolgt unmittelbar nach dem Klebstoffauftrag. Bis zum Abbinden des Klebstoffes ist eine mechanische Fixierung der zu verbindenden Teile erforderlich. Dieses Verfahren wird häufig zur Verklebung von Holz oder textilen Substraten verwendet.

Den Klebstoffe auf Basis von wässrigen Polyurethan- bzw. Polyurethan-Polyharnstoff-Dispersionen wässrigen Polyurethan- bzw. Polyurethan-Polyharnstoff-Dispersionen können auch Polycarbodiimid-Dispersionen zugesetzt werden. Die Polycarbodiimid-Dispersionen dienen dabei u.a. als Vernetzungsmittel für wässrige Klebstoffe, Beschichtungsmittel oder Lacke. Ein Nachteil dieser Lehre ist jedoch, dass die Vernetzungsreaktion in der Klebstoff- bzw. Lackschicht unmittelbar mit dem Trockenen der wässrigen Beschichtung einsetzt und dann mit hoher Geschwindigkeit fortschreitet. Dies schränkt eine Verwendung zur Herstellung von lagerstabilen Vorbeschichtungen von Substratoberflächen, selbsttragenden latent-reaktiven Klebstofffolien oder reaktiven Klebstoffpulvern stark ein.

EP3730528A1 beschreibt latent-reaktive Klebstoffzusammensetzungen basierend auf FeststoffPolycarbodiimiden mit einer Glasübergangstemperatur von wenigstens 30°C, die sich in Kombination mit Carboxylgruppen enthaltenden Polymerdispersionen zu selbsttragenden latent-reaktiven Klebstofffolien oder reaktiven Klebstoffpulvern verarbeiten lassen. Die verwendeten Feststoffpolycarbodiimide müssen allerdings zum Erreichen einer ausreichenden Reaktivität als sehr feines Pulver vorliegen. Dies ist nicht nur in der Herstellung sehr aufwändig, sondern birgt auch noch das weitere Problem, dass es beim Lagern als Feststoff zur Agglomeration neigen und dass es in wässrigen Klebstoffzubereitungen zur Sedimentation kommen kann. Zudem ist die Reaktivität der erhaltenen Klebstofffilme nicht ausreichend. Unter Feststoffpolycarbodiimiden versteht man im Sinne der vorliegenden Erfindung Polycarbodiimide mit einer Glasübergangstemperatur von mehr als +30 C.

In der verarbeitenden Industrie besteht jedoch der dringende Wunsch, den Klebstoffauftrag und den Fügeprozess räumlich und zeitlich voreinander zu trennen. Werden z.B. (teil)kristalline Polyurethan-Dispersionspolymere für den Fügeprozess verwendet, dann ist es vorteilhaft, wenn die Vernetzungsreaktion des Klebstoffpolymers erst durch die ohnehin notwendige Erwärmung der Klebstoffschicht vor oder während des Fügeprozesses ausgelöst wird. Unter "Dispersionspolymeren" versteht der Fachmann auf diesem technischen Gebiet solche Polymere, die auf grundsätzlich bekannte Weise als dispergierte Phase in wässrigen Dispersionen eingesetzt werden können. Diese Dispersionspolymere werden auch als "dispergierbare Polymere" bezeichnet. Es handelt sich bei einem Dispersionspolymer daher um das Polymer in den Polymerpartikeln (disperse Phase) einer kolloidal stabilen Polymerdispersion. Bei der kontinuierlichen Phase handelt es sich bei Polyurethandispersionen in der Regel um Wasser. Eine Polymerdispersion besteht somit aus wenigstens einer dispersen Phase (Polymerpartikel) und einer kontinuierlichen Phase (dem Dispersionsmedium).

Wird die Polymerdispersion auf ein Substrat aufgetragen und das Dispersionsmedium abgedampft, dann

entsteht - wenn die Temperatur des Polymers oberhalb der Mindestfilmbildungstemperatur (MFT) liegt - ein Polymerfilm aus dem Dispersionspolymer. Der Polymerfilm enthält alle bei der Trocknungstemperatur nicht-flüchtigen Bestandteile der Polymerdispersion.

Latent-reaktive Zubereitungen von Dispersionspolymeren, die Feststoff-Isocyanate als Vernetzungsmittel enthalten bzw. mit solchen Feststoffisocyanaten gemischt als disperse Phase einer Dispersion auf Substrate aufgebracht werden, sind bekannt.

EP-A 0 922 720 offenbart die Verwendung wenigstens einer, im Wesentlichen wässrigen Dispersion, die wenigstens ein festes oberflächendesaktiviertes Polyisocyanat und wenigstens ein mit Isocyanat reaktives Polymer enthält, zur Herstellung von getrockneten, lagerstabilen, latent-reaktiven Schichten oder Pulvern.

WO2020035573A1 beschreibt eine Klebstoffformulierung bestehend aus zumindest einer Polyurethandispersion, einem oberflächen-desaktivierten Feststoffisocyanat und einem Polycarbodiimid. Die Klebstoffformulierungen werden unmittelbar nach dem Trocknen zum Kleben von Substraten, insbesondere von Schuhsolen eingesetzt, eine Zwischenlagerung der getrockneten Klebstofffilme wird nicht erwähnt. Es wird explizit beschrieben, dass eine Wärmeaktivierung unmittelbar nach dem Trocknen des Klebstoffes erfolgen sollte.

Prinzipiell können nach dieser Lehre alle Feststoff-Isocyanate verwendet werden. Es hat sich jedoch gezeigt, dass bei Einsatz von (teil)kristallinen Polyurethandispersionspolymeren zwei Feststoff-Isocyanate bevorzugt verwendet werden können: Das TDI-Dimer und das IPDI-Trimer. Beide Isocyanate sind in den geschmolzenen Polyurethan-Dispersionspolymeren gut löslich bzw. mit ihnen gut verträglich, was für die gleichmäßige und gute Vernetzung des Klebstoffpolymers vorteilhafterweise erforderlich ist.

Beide Feststoff-Isocyanate weisen jedoch in einigen Punkten Nachteile auf:
Sobald sich das TDI-Dimer im geschmolzenen Polyurethanpolymer auflöst, beginnt die Rückspaltung des TDI-Dimers in das TDI-Monomer (2,4-TDI). Das 2,4-TDI ist leicht flüchtig und kann aus der Klebstoffschicht beispielsweise durch poröse Substrate (Textil) in den Gasraum über der Klebeverbindung freigesetzt werden. 2,4-TDI ist ein Gefahrstoff, der nach GHS (Globally Harmonized System of Classification, Labelling and Packaging of Chemicals) wegen seiner akuten Toxizität mit GHS 06 und wegen diverser Gesundheitsgefahren mit GHS08 gekennzeichnet werden muss.

Nach Lehre der EP-A 1 600 485 kann die Freisetzung von 2,4-TDI durch die Mitverwendung von Katalysatoren deutlich verringert werden. Es hat sich jedoch gezeigt, dass die Freisetzung von 2,4-TDI nicht sicher auf Mengen unterhalb der Nachweisegrenze reduziert werden kann. Aus diesem Grund kommen latent-reaktive Klebstoffschichten, die das TDI-Dimer als Feststoff-Isocyanate enthalten, bei z.B. Klebprozessen für Anbaubauteile im Automobilinnenraum (Armaturentafel, Türseitenteil) nicht zur Anwendung.

Beim IPDI-Trimer ist nachteilig, dass seine wässrigen Formulierungen nur eine begrenzte Lagerstabilität besitzen. So beträgt die max. Lagerdauer wässriger Formulierungen mit dem IPDI-Trimer bei 23°C nur 1-2 Monate, bei 30°C ca. 2 Wochen und bei 35°C nur noch ca.1 Woche. Darüber hinaus ist das IPDI-Trimer deutlich weniger reaktiv als das TDI-Dimer und wird daher fast ausschließlich unter Mitverwendung geeigneter Katalysatoren verarbeitet (s. EP-A 2 099 840 A1 bzw. WO 2008/071307).

Es besteht daher in der klebstoffverarbeitenden Industrie der Wunsch nach neuen lagerstabilen wässrige Klebstoffsystemen, aus denen latent-reaktive Klebstoffschichten und -filme erzeugt werden können. Die eingesetzten Vernetzungsmittel sollen physiologisch unbedenklich sein, sich bei Verarbeitung des Klebstoffpolymers nicht zersetzen, eine ausreichend hohe Reaktivität besitzen und sedimentationsstabil in wässrigen Klebstoffen sein.

Der vorliegenden Erfindung lag die Aufgabe zugrunde, eine wässrige Polyurethandispersion zur Herstellung von lagerstabilen und latent-reaktiven Klebstoffen bereitzustellen, welche ohne die Verwendung von Feststoffisocyanaten und/oder Feststoffpolycarbodiimiden auskommt.

Diese Aufgabe wird gelöst durch die erfindungsgemäße Verwendung einer wässrigen Dispersion zur Herstellung von lagerstabilen und latent-reaktiven Klebstoffen, wobei die wässrige Dispersion mindestens die folgenden dispergierten Komponenten enthält:

(A) mindestens ein teilkristallines oder kristallines Carboxylgruppen enthaltendes Polyurethanpolymer, welches eine Schmelztemperatur im Bereich von 35 bis 80 °C, eine Schmelzenthalpie von ≥ 15 J/g, jeweils bestimmt mittels DSC (differential scanning calometry) bei einer Aufheizrate von 20 K/min gemäß DIN EN ISO 11357-1:2017 (2017-02), und eine partielle Säurezahl im Bereich von 0,8 mg KOH / g bis 25 mg KOH /g, bestimmt gemäß DIN EN ISO 2114:2000 (2002-06, Verfahren A mit einem Aceton-Ethanol-Lösungsmittelgemisch), aufweist;

(B) mindestens ein Polycarbodiimid, mindestens ein Polyaziridin und/oder eine Mischung davon, wobei das mindestens eine Polycarbodiimid und das mindestens eine Polyaziridin eine Glasübergangstemperatur im Bereich von -150 °C bis 30 °C aufweist, bestimmt gemäß DSC (differential scanning calometry) DIN EN ISO 11357-1 (2017-02);

(C) gegebenenfalls mindestens ein weiteres Polymer, welches von dem mindestens einen Polymer (A) verschieden ist; und

(D) gegebenenfalls mindestens einen Zusatzstoff der von den Komponenten (A), (B) und (C) verschieden ist.

Eine weitere Aufgabe war die Bereitstellung eines Verfahren zum Verbinden von mindestens zwei Substraten oder mindestens zwei Oberflächenbereichen eines Substrates.

Diese Aufgabe wird gelöst durch das erfindungsgemäße Verfahren zum Verbinden von mindestens zwei Substraten oder mindestens zwei Oberflächenbereichen eines Substrates, umfassend mindestens die Schritte

(i) Bereitstellen einer wässrigen Dispersion enthaltend mindestens die folgenden dispergierten Komponenten:

(A) mindestens ein teilkristallines oder kristallines Carboxylgruppen enthaltendes Polyurethanpolymer, welches eine Schmelztemperatur im Bereich von 35 bis 80 °C, eine Schmelzenthalpie von ≥ 15 J/g, jeweils bestimmt mittels DSC (differential scanning calometry) bei einer Aufheizrate von 20 K/min gemäß DIN EN ISO 11357-1:2017 (2017-02), und eine partielle Säurezahl im Bereich von 0,8 mg KOH / g bis 25 mg KOH /g, bestimmt gemäß DIN EN ISO 2114:2000 (2002-06, Verfahren A mit einem Aceton-Ethanol-Lösungsmittelgemisch), aufweist;

(B) mindestens ein Polycarbodiimid, mindestens ein Polyaziridin und/oder eine Mischung davon, wobei das mindestens eine Polycarbodiimid und das mindestens eine Polyaziridin eine Glasübergangstemperatur im Bereich von -150 °C bis 30 °C aufweisen bestimmt gemäß DSC (differential scanning calometry) DIN EN ISO 11357-1 (2017-02);

(C) gegebenenfalls mindestens ein weiteres Polymer, welches von dem mindestens einen Polymer (A) verschieden ist; und

(D) gegebenenfalls mindestens einen Zusatzstoff der von den Komponenten (A), (B) und (C) verschieden ist,

(ii) Applizieren der wässrigen Dispersion aus Schritt (i) auf mindestens einem Teil mindestens einer Oberfläche bzw. eines Oberflächenbereichs des mindestens einen Substrates, oder auf ein geeignetes Trägermedium zur Herstellung von selbstragenden Klebstofffilmen,

(iii) Trocknen der vorhandenen mindestens einen Dispersion aus Schritt (ii), um mindestens eine lagerstabile und latent-reaktive Klebstoffschicht oder einen lagerstabilen und latent-reaktiven selbsttragenden Klebstofffilm zu erhalten,

(iv) Lagern des mindestens einen Substrats oder des selbsttragenden Klebstofffilmes aus Schritt (iii) für einen Zeitraum von mindestens 8 Stunden, vorzugsweise von 8 Stunden bis 2400 Stunden, besonders bevorzugt von 8 Stunden bis 168 Stunden, bei einer Temperatur im Bereich von -40 °C bis 30 °C, und

(v) Inkontaktbringen der mindestens einen lagerstabilen und latent-reaktiven Klebstoffschicht mit mindestens einem weiteren Oberflächenbereich des mindestens einen Substrats, mit mindestens einem Teil eines weiteren Substrats oder mit mindestens einem Teil einer auf einem weiteren Substrat vorhandenen Klebstoffschicht, bei einer Temperatur im Bereich von 40 °C bis 200°C, bevorzugt von 50 bis 120 °C, besonders bevorzugt von 55 bis 100 °C oder Inkontaktbringen des selbsttragenden Klebstofffilmes mit mindestens zwei Substraten bei einer Temperatur im Bereich von 40 °C bis 200°C, bevorzugt von 50 bis 120 °C, besonders bevorzugt von 55 bis 100 °C.

Überraschend wurde gefunden, dass die beschriebenen erfindungsgemäßen Dispersionen zur Herstellung von lagerstabilen und latent-reaktiven Klebstoffen eignen, obwohl diese Klebstoffe Polycarbodiimide mit einer sehr niedrigen Glasübergangstemperatur und Carboxylgruppen enthaltende Polyurethandispersionen enthalten. Diese Klebstoffe können auch nach mehreren Monaten noch zum Kleben von unterschiedlichen Substraten verwendet werden, beispielsweise im Thermoaktivierungsverfahren. Weiterhin wurde überraschend gefunden, dass die beschriebenen erfindungsgemäßen Dispersionen in Klebeverfahren zum Verbinden von mindestens zwei Substraten oder mindestens zwei Oberflächenbereichen eines Substrates eignen, bei dem latent-reaktive Klebstoffe eingesetzt werden.

Das Wort "ein" im Zusammenhang mit zählbaren Größen ist im Rahmen der vorliegenden Erfindung nur dann als Zahlwort zu verstehen, wenn dies ausdrücklich gesagt wird (z. B. durch den Ausdruck "genau ein"). Wenn im Folgenden beispielsweise von "einem Polyisocyanat" gesprochen wird, ist das Wort "ein" lediglich als unbestimmter Artikel und nicht als Zahlwort aufzufassen, es ist also damit auch eine Ausführungsform umfasst, in der zwei oder mehr Polyisocyanate vorhanden sind die sich beispielsweise strukturell unterscheiden.

Unter "Polyurethanpolymer" werden in Sinne der Erfindung sowohl Polyurethanpolymere als auch Polyurethan-Harnstoffpolymere bzw. Polyurethan-Polyharnstoffpolymere verstanden.

Unter "wässrige Dispersion" wird im Sinne der Erfindung eine wässrige Dispersion, wässrige Emulsion, wässrige Suspension, oder ein Zwischenzustand/Zwischenform aus diesen verstanden, vorzugsweise eine wässrige Dispersion, wässrige Emulsion und/oder wässrige Suspension.

Besonders bevorzugt wird unter dem Begriff Dispersion eine wässrige Emulsion und/oder eine wässrige Suspension verstanden. Der Begriff "Polyurethandispersion" bezeichnet sowohl Polyurethanals auch Polyurethan-(Poly)Harnstoff-Dispersionen.

Unter "offene Zeit" wird im Sinne der Erfindung die Zeit nach der Trocknung eines Klebstoffes verstanden, bei der der Klebstoff noch in der Lage ist, um unter den üblichen Bedingungen bei der wärmeinduzierten Klebung noch ausreichend zu fließen und eine Benetzung eines zu verklebenden Substrats unter moderatem Druck noch möglich ist, sodass z.B. eine hohe Verbundfestigkeit von verklebten Substraten erreicht werden kann

In Sinne der Erfindung zeichnen sich lagerstabile Vorbeschichtungen von Substratoberflächen, lagerstabilen Klebstoffe lagerstabile Klebstoffschichten, selbsttragende, lagerstabile Klebstofffilme und / oder lagerstabile Klebstoffpulver dadurch aus, dass sie sich nach Lagerung unter Normbedingungen (23 °C, 50% relativer Feuchte) nach mehr als 24h, besonders bevorzugt nach mehr als 7d noch geeignet sind, um unter den üblichen Bedingungen bei der wärmeinduzierten Klebung noch ausreichend zu Fließen und eine Benetzung eines zu verklebenden Substrats unter moderatem Druck noch möglich ist.

Üblicherweise wird bei der wärmeinduzierten Klebung der Klebstoff auf eine Temperatur zwischen 40 und 120 °C erhitzt und die Substrate mit einem moderaten Druck, beispielsweise 0,5 bis 10 bar verpresst.

Unter "latent-reaktiver Klebstoff" wird im Sinne der Erfindung ein Klebstoff verstanden, der Verbindungen aufweist, welche funktionelle Gruppen enthalten, die miteinander eine Reaktion eingehen können und deren Reaktion durch Erhöhung der Temperatur auf, bevorzugt aber über die Schmelztemperatur der Komponente (A) eingeleitet oder beschleunigt werden, welches zu einer Vernetzung und damit einem Anstieg der Wärmebeständigkeit des vernetzten Klebstoffes führt.

Als kristallin wird erfindungsgemäß ein Polymer, insbesondere Polyurethanpolymer, bezeichnet, wenn es in der DSC-Messung nach DIN EN ISO 11357-1:2017 (2017-02) bei einer Aufheizrate von 20 K/min in der ersten Aufheizung einen Schmelzpeak aufweist. Der Schmelzpeak wird durch das Aufschmelzen regelmäßiger Teilstrukturen im Polymer, insbesondere Polyurethanpolymer, verursacht. Als teilkristallin wird erfindungsgemäß ein Polymer, insbesondere Polyurethanpolymer, bezeichnet, wenn es in der DSC-Messung nach DIN EN ISO 11357-1:2017 (2017-02) bei einer Aufheizrate von 20 K/min in der ersten Aufheizung einen Schmelzpeak aufweist und in der dritten Aufheizung einen Glasübergang aufweist.

Die Schmelztemperatur des in der erfindungsgemäßen wässrigen Dispersion enthaltenden mindestens einen teilkristallinen oder kristallinen Carboxylgruppen enthaltenden Polyurethanpolymers (A) liegt im Bereich von 35 bis 80 °C, bevorzugt 40 bis 70 °C, besonders bevorzugt 42 bis 55 °C. Die Schmelzenthalpie des mindestens einen teilkristallinen oder kristallinen Carboxylgruppen enthaltenden Polyurethanpolymers (A) ist $\geq$ 15 J/g. Das mindestens eine Polycarbodiimid und das mindestens eine Polyaziridin weisen eine Glasübergangstemperatur von im Bereich von -150 °C bis 30 °C auf. Die Schmelztemperatur und die Schmelzenthalpie werden bei der ersten Aufheizung ausgehend von einer Starttemperatur von -100 °C in der DSC-Messung nach DIN EN ISO 11357-1:2017 (2017-02) bei einer Aufheizrate von 20 K/min ermittelt. Die Glasübergangstemperatur wird bei der dritten Aufheizung ausgehend von einer Starttemperatur von -180 °C in der DSC-Messung nach DIN EN ISO 11357-1:2017 (2017-02) bei einer Aufheizrate von 20 K/min ermittelt. Bei der Anwendung der DIN EN ISO 11357-1:2017 (2017-02) wird zur Bestimmung der Glasübergangstemperatur der Normteil DIN EN ISO 11357-2:2020-08 und bei der Bestimmung der Schmelztemperatur und der Schmelzenthalpie der Normteil DIN EN ISO 11357-3:2018-07 mit herangezogen. Für die DSC-Messung von Polymeren, die in wässriger Dispersion vorliegen, erfolgt die Probennahme aus einem bei 23 °C und 50% relativer Luftfeuchte zur Gewichtskonstanz getrockneten und anschließend für 3 Tage bei 0% relativer Luftfeuchte in einer Trockenbox gelagerten Polymerfilm.

Bevorzugt bedeuten erfindungsgemäß die Ausdrücke "umfassend" oder "enthaltend", "im Wesentlichen bestehend aus" und besonders bevorzugt "bestehend aus". Es ist darauf hinzuweisen, dass die in den Ansprüchen einzeln aufgeführten Merkmale in beliebiger, technisch sinnvoller Weise miteinander kombiniert werden können (auch über Kategoriegrenzen, beispielsweise zwischen Verfahren und Verwendung, hinweg) und weitere Ausgestaltungen der Erfindung aufzeigen. Die Beschreibung charakterisiert und spezifiziert die Erfindung zusätzlich.

Es sei ferner darauf hingewiesen, dass eine hierin verwendete, zwischen zwei Merkmalen stehende und diese miteinander verknüpfende Konjunktion "und/oder" stets so auszulegen ist, dass in einer ersten Ausgestaltung des erfindungsgemäßen Gegenstands lediglich das erste Merkmal vorhanden sein kann, in einer zweiten Ausgestaltung lediglich das zweite Merkmal vorhanden sein kann und in einer dritten Ausgestaltung sowohl das erste als auch das zweite Merkmal vorhanden sein können.

In einer bevorzugten Ausführungsform sind die lagerstabilen und latent-reaktiven Klebstoffe lagerstabile und latent-reaktive Klebstoffschichten, selbsttragende, lagerstabile und latent-reaktive Klebstofffilme und / oder lagerstabile und latent-reaktive Klebstoffpulver. In einer bevorzugten Ausführungsform liegen die Klebstoffschichten und / oder

Klebstofffilme auf einem Substrat vor, wobei das Substrat vorzugsweise ausgewählt ist aus der Gruppe bestehend aus Holz, Papier, thermoplastischen Kunststoffen, elastomeren Kunststoffen, thermoplastisch-elastomeren Kunststoffen, Vulkanisaten, textilen Geweben, Gewirken, Geflechten, Leder, Metallen, Keramik, Asbestzement, Steinzeug, Beton, Schaumstoffen und / oder Kombinationen aus mindestens zweien hiervon.

In einer bevorzugten Ausführungsform weisen die Klebstoffe und / oder die Klebstoffschicht eine Lagerstabilität von mehr als 14 Tagen bei einer Temperatur von 23 °C auf, vorzugsweise mehr als 28 Tagen, besonders bevorzugt eine Lagerstabilität im Bereich von 14 Tagen bis 365 Tagen bei einer Temperatur von 23 °C.

In einer bevorzugten Ausführungsform weisen die Klebstoffe und / oder die Klebstoffschicht eine Schmelzenthalpie von ≥ 15 J/g, vorzugsweise im Bereich von 15 J/g bis 100 J/g, besonders bevorzugt im Bereich von 20 J/g bis 60 J/g auf, bestimmt mittels DSC (differential scanning calometry) DIN EN ISO 11357-1 (2017-02).

In einer bevorzugten Ausführungsform weist die wässrige Dispersion eine partielle Säurezahl im Bereich von 0,5 mg KOH / g bis 10 mg KOH /g, vorzugsweise im Bereich von 1,0 mg KOH / g bis 10 mg KOH /g, besonders bevorzugt im Bereich von 2 mg KOH / g bis 6 mg KOH /g auf, bestimmt gemäß DIN EN ISO 2114:2000 (2002-06, Verfahren A mit einem Aceton-Ethanol-Lösungsmittelgemisch).

In einer bevorzugten Ausführungsform ist das molare Verhältnis von Carbodiimidgruppen (-N=C=N-) zu Carboxylgruppen (-COOH) in der Komponente A im Bereich von 0,2:1 bis 5:1, bevorzugt im Bereich von 0,5:1 bis 2,9: 1.

In einer bevorzugten Ausführungsform enthält die wässrige Dispersion
40 Gew.-% bis 99,5 Gew.-%, vorzugsweise 70 Gew.-% bis 98,5 Gew.-%, der Komponente (A), 0,5 Gew.-% bis 40 Gew.-%, vorzugsweise 1,5 Gew.-% bis 30 Gew.-%, der Komponente (B), und 0 Gew.-% bis 50 Gew.-%, vorzugsweise 0 Gew.-% bis 28,5 Gew.-%, der Komponente (C), und sich die Mengenanteile von (A), (B) und (C) zu 100 Gew.-% addieren.

In einer bevorzugten Ausführungsform enthält die erfindungsgemäße wässrige Dispersion organische Lösungsmittel in einer Konzentration von ≤ 5 Gew.-%, vorzugsweise ≤ 1 Gew.-% bezogen auf das Gesamtgewicht der wässrigen Klebstoffformulierung. In einer weiteren bevorzugten Ausführungsform enthält die erfindungsgemäße wässrige Dispersion kein Aceton und / oder organische polar aprotische Lösungsmittel.

Die einzelnen Komponenten der in der erfindungsgemäßen wässrigen Dispersion enthaltenen Komponenten werden im Folgenden detailliert beschrieben.

## Komponente (A)

Die erfindungsgemäße wässrige Dispersion enthält als Komponente (A) mindestens ein teilkristallines oder kristallines Carboxylgruppen enthaltendes Polyurethanpolymer, welches eine Schmelztemperatur im Bereich von 35 bis 80 °C, eine Schmelzenthalpie von ≥ 15 J/g, jeweils bestimmt mittels DSC (differential scanning calometry) bei einer Aufheizrate von 20 K/min gemäß DIN EN ISO 11357-1:2017 (2017-02), und eine partielle Säurezahl im Bereich von 0,8 mg KOH / g bis 25 mg KOH /g, bestimmt gemäß DIN EN ISO 2114:2000 (2002-06, Verfahren A mit einem Aceton-Ethanol-Lösungsmittelgemisch), aufweist.

Im Falle, das mehrere Polymere als Komponente (A) vorliegen, weist die Mischung dieser Polymere eine durchschnittliche partielle Säurezahl im Bereich von 0,8 mg KOH / g bis 25 mg KOH /g, bestimmt gemäß DIN EN ISO 2114:2000 (2002-06, Verfahren A mit einem Aceton-Ethanol-Lösungsmittelgemisch), auf, wobei vorzugsweise jedes der Polymere in der Mischung eine partielle Säurezahl im Bereich von 0,8 mg KOH / g bis 25 mg KOH /g, bestimmt gemäß DIN EN ISO 2114:2000 (2002-06, Verfahren A mit einem Aceton-Ethanol-Lösungsmittelgemisch), aufweist.

Im Falle, das mehrere Polymere als Komponente (A) vorliegen, weist die Mischung dieser Polymere eine durchschnittliche Schmelztemperatur im Bereich von 35 bis 80 °C und eine Schmelzenthalpie von ≥ 15 J/g, jeweils bestimmt mittels DSC (differential scanning calometry) bei einer Aufheizrate von 20 K/min gemäß DIN EN ISO 11357-1:2017 (2017-02), auf, wobei vorzugsweise jedes der Polymere in der Mischung eine Schmelztemperatur im Bereich von 35 bis 80 °C und eine Schmelzenthalpie von ≥ 15 J/g, jeweils bestimmt mittels DSC (differential scanning calometry) bei einer Aufheizrate von 20 K/min gemäß DIN EN ISO 11357-1:2017 (2017-02), aufweist.

Das als Komponente (A) geeignete Polyurethan ist vorzugsweise filmbildend, vorzugsweise filmbildend mit einer Mindestfilmbindungstemperatur nach DIN ISO 2115:2001-04 im Bereich von 0 bis 100 °C, besonders bevorzugt zwischen 0 und 35 °C und kann beispielsweise ein einzelnes Carboxylgruppen enthaltendes Polyurethan, oder eine Mischung aus mindestens zwei verschiedenen Carboxylgruppen enthaltenden Polyurethanen sein.

Bevorzugt erfolgt die Vernetzungsreaktion mit Carbodiimid-Gruppen überwiegend bzw. ausschließlich über die eingebauten Carboxylgruppen in dem als Komponente (A) geeignete Polyurethans.

Als Komponente (A) eignen sich alle dem Fachmann bekannten teilkristallinen oder kristallinen Carboxylgruppen enthaltenden Polyurethanpolymere, welches eine Schmelztemperatur im Bereich von 35 bis 80 °C, eine Schmelzenthalpie von ≥ 15 J/g, jeweils bestimmt mittels DSC (differential scanning calometry) bei einer Aufheizrate von 20 K/min gemäß DIN EN ISO 11357-1:2017 (2017-02), und eine partielle Säurezahl im Bereich von 0,8 mg KOH / g bis 25 mg KOH /g, bestimmt gemäß DIN EN ISO 2114:2000 (2002-06, Verfahren A mit einem Aceton-Ethanol-Lösungsmittelgemisch), aufweisen. Ein als Komponente (A) geeignetes Polyurethanpolymer ist/sind im Allgemeinen ein oder mehrere Polyurethane im engeren Sinn, d.h. solche Polymere, die durch Polymerisation von Polyolen und Polyisocyanaten erhalten werden, aber es können auch solche sein, bei denen als Aufbau-Komponenten auch Mono- und/oder Diamine eingesetzt werden, gegebenenfalls als Kettenverlängerer. Im Rahmen der vorliegenden Erfindung ist somit das Polyurethanpolymer der Komponente (A) im Allgemeinen mindestens ein Polyurethan, mindestens ein Polyharnstoff und/oder mindestens ein Polyurethanharnstoff.

Die als Komponente (A) geeigneten Polyurethanpolymere bzw. deren wässrigen Polyurethan- bzw. Polyurethan-Harnstoff-Dispersionen sind typischerweise Umsetzungsprodukte aus:

(A1) mindestens einer Diol- und/oder Polyolkomponente;

(A2) mindestens einer Di- und/oder Polyisocyanatkomponente;

(A3) mindestens einer isocyanatreaktive Komponente, die mindestens eine freie Carboxylgruppe aufweist, wobei bevorzugt die isocyanatreaktive Komponente bis zu zwei Amino- und/oder Hydroxylgruppen und eine freie Carboxylgruppe aufweist, wobei die isocyanatreaktive Komponente (A3) verschieden von den Komponenten (A1), (A2), (A4) und (A5) ist;

(A4) optional mindestens einer neutralisierte Sulfonsäuregruppe aufweisenden Komponente, welche isocyanatreaktive Gruppen aufweist, wobei bevorzugt die isocyanatreaktive Gruppen bis zu zwei Amino- und/oder Hydroxylgruppen sind, wobei die Komponente (A4) verschieden von den Komponenten (A1), (A2), (A3) und (A5) ist;

(A5) optional mindestens eine Komponente ist ausgewählt aus der Gruppe bestehend aus einer mono-amino-funktionellen Verbindung, di-amino-funktionellen Verbindung, tri-amino-funktionellen Verbindung, und / oder einer Mischung aus mindestens zweien davon, wobei die Komponente (A5) verschieden von den Komponenten (A1), (A2), (A3) und (A4) ist.

Komponente (A1) wird dabei typischerweise in Mengen von 20 Gew.-% bis 94 Gew.-%, bevorzugt 20 Gew.-% bis 90 Gew.-% bezogen auf das Gesamtgewicht des Polyurethanpolymers (A).

Komponente (A2) wird dabei typischerweise in Mengen von 5 Gew.-% bis 65 Gew.-%, bevorzugt 5 Gew.-% bis 60 Gew.-% bezogen auf das Gesamtgewicht des Polyurethanpolymers (A).

Komponente (A3) wird dabei typischerweise in Mengen von 0,25 Gew.-% bis 15 Gew.-%, bevorzugt 0,25 Gew.-% bis 10 Gew.-% bezogen auf das Gesamtgewicht des Polyurethanpolymers (A).

Komponente (A4) wird dabei typischerweise in Mengen von 0 Gew.-% bis 10 Gew.-%, bevorzugt 0,5 Gew.-% bis 8 Gew.-% bezogen auf das Gesamtgewicht des Polyurethanpolymers (A).

Komponente (A5) wird dabei typischerweise in Mengen von 0 Gew.-% bis 10 Gew.-%, bevorzugt 0 Gew.-% bis 5 Gew.-% bezogen auf das Gesamtgewicht des Polyurethanpolymers (A).

Die Mengenanteile der Komponenten (A1), (A2), (A3), (A4) und (A5) addieren sich zu 100 Gew.-%. Es ist im Rahmen der Erfindung selbstverständlich, dass durch die vorstehend beschriebenen Komponenten (A1) bis (A5) und deren typischen und bevorzugten Mengenangaben auch sämtliche Kombinationen der im einzelnen genannten Mengenbereiche untereinander erfasst sind.

Geeignete Diol- und/oder Polyolkomponenten (A1) sind Verbindungen mit mindestens zwei gegenüber Isocyanaten reaktionsfähigen Wasserstoffatomen und einem mittleren Molekulargewicht (Mn) im Bereich von 62 bis 18000, bevorzugt im Bereich von 62 bis 6000 g/mol besonders bevorzugt im Bereich von 400 bis 6000 g/mol, bestimmt gemäß DIN EN ISO 13885-1 (2021-11) mit Tetrahydrofuran als Eluent und Polystyrol als Standard Beispiele für geeignete Aufbaukomponenten sind Polyether, Polyester, Polycarbonate, Polylactone und Polyamide. Bevorzugte Polyole (A1) weisen 2 bis 4, besonders bevorzugt 2 bis 3 Hydroxylgruppen auf. Auch Gemische verschiedener derartiger Verbindungen kommen in Frage.

Als Aufbaukomponente (A1) in Komponente (A) geeignete kristalline oder teilkristalline difunktionelle Polyesterpolyole kommen insbesondere lineare Polyesterdiole oder auch schwach verzweigte Polyesterpolyole in Betracht, wie sie in bekannter Weise aus aliphatischen, cycloaliphatischen oder aromatischen Di- oder Polycarbonsäuren, wie z.B. Bernstein-, Methylbernstein-, Glutar-, Adipin-, Pimelin-, Kork-, Azelain-, Sebacin-, Nonandicarbon-, Decandicarbon-, Terephthal-, Isophthal-, o-Phthal-, Tetrahydrophthal-, Hexahydrophthal-, Cyclohexandicarbon-, Malein-, Fumar-, Malon- oder Trimellitsäure sowie Säureanhydride, wie o-Phthal-, Trimellit- oder Bernsteinsäureanhydrid oder deren Gemische mit mehrwertigen Alkoholen, wie z.B. Ethandiol, Di-, Tri-, Tetraethylenglykol, 1,2-Propandiol, Di-, Tri-, Tetrapropylenglykol, 1,3-Propandiol, Butandiol-1,4, Butandiol-1,3, Butandiol-2,3, Pentandiol-1,5, Hexandiol-1,6, 2,2-Dimethyl-1,3-propandiol, 1,4-Dihydroxycyclohexan, 1,4-Dimethylolcyclohexan, Octandiol-1,8, Decandiol-1,10, Dodecandiol-1,12 oder deren Gemische, gegebenenfalls unter Mitverwendung höherfunktioneller Polyole, wie Trimethylolpropan, Glycerin

oder Pentaerythrit, hergestellt werden können. Als mehrwertige Alkohole zur Herstellung der Polyesterpolyole kommen natürlich auch cycloaliphatische und/oder aromatische Di- und Polyhydroxylverbindungen in Frage. Anstelle der freien Polycarbonsäure können auch die entsprechenden Polycarbonsäureanhydride oder entsprechende Polycarbonsäureester von niedrigen Alkoholen oder deren Gemische zur Herstellung der Polyester verwendet werden.

Selbstverständlich kann es sich bei den Polyesterpolyolen auch um Homo- oder Mischpolymerisate von Lactonen handeln, die bevorzugt durch Anlagerung von Lactonen oder Lactongemischen, wie Butyrolacton, ε-Caprolacton und/oder Methyl-ε-caprolacton an die geeignete di- und/oder höherfunktionelle Startermoleküle, wie z.B. die vorstehend als Aufbaukomponenten für Polyesterpolyole genannten niedermolekularen, mehrwertigen Alkohole erhalten werden. Die entsprechenden Polymerisate des ε-Caprolactons sind bevorzugt.

Besonders bevorzugt sind weitgehend lineare Polyesterpolyole, die als Aufbaukomponenten Adipinsäure und/oder Sebacinsäure und/oder Decandicarbonsäure und Butandiol-1,4 und/oder Hexandiol-1,6 enthalten.

Wenn die kristallinen oder teilkristallinen difunktionellen Polyesterpolyole mit einem zahlenmittleren Molekulargewicht von wenigstens 400 g/mol und einer Schmelztemperatur von wenigstens 35 °C eine Schmelzenthalpie von wenigstens 50 J/g aufweisen, so hat das unter Verwendung desselben hergestellte Polymer regelmäßig eine Schmelzenthalpie von ≥ 15 J/g. Falls gewünscht kann eine Adjustierung der Schmelzenthalpie des Polymers durch eine leichte Veränderung des Gehaltes an Polyesterpolyol (A1) in der Zusammensetzung oder durch eine geringe Variation der Schmelzenthalpie des Polyesterpolyols erreicht werden. Diese Maßnahmen erfordern lediglich orientierende Versuche und liegen völlig innerhalb der praktischen Erfahrung des Durchschnittsfachmanns auf diesem Gebiet.

Die Herstellung von Polyesterpolyolen (A1) ist aus dem Stand der Technik bekannt.

Die Schmelztemperatur der kristallinen bzw. teilkristallinen Polyesterpolyole liegt in der Regel mindestens bei 35 °C, bevorzugt 40 bis 80 °C, besonders bevorzugt 42 bis 60 °C. Die Schmelzenthalpie beträgt ≥ 15 J/g, bevorzugt ≥ 40 J/g und besonders bevorzugt ≥ 50 J/g.

Bevorzugt ist Komponente (A1) wenigstens ein difunktionelles, teilkristallines oder kristallines, aliphatisches Polyesterpolyol mit einem Molekulargewicht (Mn) im Bereich von 400 bis 6000 g/mol, bestimmt gemäß DIN EN ISO 13885-1 (2021-11) mit Tetrahydrofuran als Eluent und Polystyrol als Standard.

Auch Hydroxylgruppen aufweisende Polycarbonate kommen als Polyhydroxylkomponenten in Betracht, z.B. solche, die durch Umsetzung von Diolen wie 1,4-Butandiol und/oder 1,6-Hexandiol mit Diarylcarbonaten, wie z.B. Diphenylcarbonat, Dialkylcarbonaten, wie z. B. Dimethylcarbonat oder Phosgen hergestellt werden können. Durch die zumindest teilweise Verwendung von Hydroxylgruppen aufweisenden Polycarbonaten kann die Hydrolysebeständigkeit der Polyurethan- bzw. Polyurethan-Harnstoff-Dispersionsklebstoffe verbessert werden.

Bevorzugt sind Polycarbonate, die durch Umsetzung von 1,6-Hexandiol mit Dimethylcarbonat hergestellt wurden.

Als Polyetherpolyole geeignet sind z.B. die Polyadditionsprodukte der Styroloxide, des Ethylenoxids, Propylenoxids, Tetrahydrofurans, Butylenoxids, Epichlorhydrins, sowie ihre Mischadditionsund Pfropfprodukte, sowie die durch Kondensation von mehrwertigen Alkoholen oder Mischungen derselben und die durch Alkoxylierung von mehrwertigen Alkoholen, Aminen und Aminoalkoholen gewonnenen Polyetherpolyole. Als Aufbaukomponenten A) geeignete Polyetherpolyole sind die Homo-, Misch- und Pfropfpolymerisate des Propylenoxids und des Ethylenoxids, welche durch Anlagerung der genannten Epoxide an niedermolekulare Di- oder Triole, wie sie oben als Aufbaukomponenten für Polyesterpolyole genannte werden oder an höherfunktionelle niedermolekulare Polyole wie z.B. Pentaerythrit oder Zucker oder an Wasser zugänglich sind.

Besonders bevorzugte di- oder höherfunktionelle Polyole (A1) sind Polyesterpolyole, und Polycarbonate. Und die nichtkristallinen difunktionellen Polyesterpolyole sind bevorzugt nur in untergeordneter Menge.

Ebenfalls geeignete Komponenten (A1) sind niedermolekulare Diole, Triole und/oder höhere Alkohole wie z.B. Ethandiol, Di-, Tri-, Tetraethylenglykol, 1,2-Propandiol, Di-, Tri-, Tetrapropylenglykol, 1,3-Propandiol, Butandiol-1,4, Butandiol-1,3, Butandiol-2,3, Pentandiol-1,5, Hexandiol-1,6, 2,2-Dimethyl-1,3-propandiol, 1,4-Dihydroxycyclohexan, 1,4-Dimethylolcyclohexan, Octandiol-1,8, Decandiol-1,10, Dodecandiol-1,12, Neopentylglykol, 1,4-Cyclohexandiol, 1,4-Cyclohexandimethanol, 1,4-, 1,3-, 1,2-Dihydroxybenzol oder 2,2-Bis-(4-hydroxyphenyl)-propan (Bisphenol A), Tricyclodecandimethanol, Trimethylolpropan, Glycerin, Pentaerythrit, Dipenthaerytrit oder deren Gemische, gegebenenfalls unter Mitverwendung weiterer nicht genannter Diole bzw. Triole. Diese niedermolekularen Diole, Triole und/oder höheren Alkohole sind bevorzugt nur in untergeordneter Menge, besonders bevorzugt weniger als 10 Gew.-% an der gesamten Komponente A1) einzusetzen.

Die niedermolekularen Komponenten (A1) haben ein Molekulargewicht von 62 bis 400 g/ Mol und werden bevorzugt in Kombination mit den oben beschriebenen Polyesterpolyolen, Polylactonen, Polyethern und/oder Polycarbonaten eingesetzt.

Polyolkomponente (A1) ist in dem in dem als Komponente (A) geeigneten Polyurethanpolymer vorzugsweise zu 20 Gew.-% bis 94 Gew.-%, bevorzugt zu 20 Gew.-% bis 90 Gewenthalten, bezogen auf das Gesamtgewicht des Polyurethanpolymers (A).

Als Komponenten (A2) sind beliebige organische Verbindungen geeignet, die mindestens zwei freie Isocyanatgruppen pro Molekül aufweisen. Bevorzugt werden Diisocyanate $Y(NCO)_2$ eingesetzt, wobei Y für einen zweiwertigen aliphatischen Kohlenwasserstoffrest mit 4 bis 12 Kohlenstoffatomen, einen zweiwertigen cycloaliphatischen Kohlenwasserstoffrest mit 6 bis 15 Kohlenstoffatomen, einen zweiwertigen aromatischen Kohlenwasserstoffrest mit 6 bis 15 Kohlenstoffatomen oder einen zweiwertigen araliphatischen Kohlenwasserstoffrest mit 7 bis 15 Kohlenstoffatomen steht. Beispiele derartiger bevorzugt einzusetzender Diisocyanate sind Tetramethylendiisocyanat, Pentamethylendiisocyanat, Methylpentamethylendiisocyanat, Hexamethylendiisocyanat, Dodecamethylendiisocyanat, 1,4-Diisocyanato-cyclohexan, 1-Isocyanato-3,3,5-trimethyl-5-isocyanatomethyl-cyclohexan, 4,4'-Diisocyanato-dicyclohexyl-methan, 4,4'-Diisocyanato-dicyclohexylpropan-(2,2), 1,4-Di-isocyanatobenzol, 2,4-Diisocyanatotoluol, 2,6-Diisocyanatotoluol, 4,4'-Diisocyanato-diphenylmethan, 2,2'-und 2,4'-Diisocyanatodiphenylmethan, Tetramethylxylylendiisocyanat, p-Xylylendiisocyanat, p-Isopropylidendiisocyanat sowie aus diesen Verbindungen bestehende Gemische.

Es ist selbstverständlich auch möglich, die in der Polyurethanchemie an sich bekannten höherfunktionellen Polyisocyanate oder auch an sich bekannte modifizierte, beispielsweise Carbodiimidgruppen, Allophanatgruppen, Isocyanuratgruppen, Urethangruppen und/oder Biuretgruppen aufweisende Polyisocyanate anteilig mitzuverwenden.

Neben diesen einfachen Diisocyanaten sind auch solche Polyisocyanate geeignet, die Heteroatome in dem die Isocyanatgruppen verknüpfenden Rest enthalten und/oder eine Funktionalität von mehr als 2 Isocyanatgruppen pro Molekül besitzen. Erstere sind z.B. durch Modifizierung einfacher aliphatischer, cycloaliphatischer, araliphatischer und/oder aromatischer Diisocyanate hergestellte, aus mindestens zwei Diisocyanaten aufgebaute Polyisocyanate mit Uretdion-, Isocyanurat-, Urethan-, Allophanat-, Biuret-, Carbodiimid-, Imino-oxadiazindion- und/oder Oxadiazintrionstruktur. Als Beispiel für ein nicht-modifiziertes Polyisocyanat mit mehr als 2 Isocyanatgruppen pro Molekül sei z.B. 4-Isocyanatomethyl-1,8-octandiisocyanat (Nonantriisocyanat) genannt.

Bevorzugt ist Komponente (A2) wenigstens ein Diisocyanat ausgewählt aus der Gruppe bestehend aus Hexamethylendiisocyanat (HDI), 1-Isocyanato-3,3,5-trimethyl-5-isocyanatomethyl-cyclohexan (IPDI), Toluol-2,4-diisocyanat (TDI), Pentamethylendiisocyanat (PDI) und / oder einer Mischung aus mindestens zwei davon.

Besonders bevorzugte Diisocyanate (A2) sind aliphatische und cycloaliphatische Diisocyanate wie Hexamethylendiisocyanat, 1,4-Diisocyanatocyclohexan, 1-Isocyanato-3,3,5-trimethyl-5-isocyanatomethyl-cyclohexan, 4,4'-Diisocyanato-dicyclohexyl-methan, 4,4'-Diisocyanato-dicydohexylpropan-(2,2), Pentamethylendiisocyanat, sowie aus diesen Verbindungen bestehende Gemische.

Ganz besonders bevorzugte Komponenten (A2) sind Gemische aus Hexamethylendiisocyanat und 1-Isocyanato-3,3,5-trimethyl-5-isocyanatomethyl-cyclohexan, Pentamethylendiisocyanat, sowie Mischungen aus 1-Isocyanato-3,3,5-trimethyl-5-isocyanatomethyl-cyclohexan und/oder 4,4'-Diisocyanato-dicyclohexyl-methan und/oder 2,4-Diisocyanatotoluol und/oder 2,6-Diisocyanatotoluol.

Komponente (A2) ist in dem als Komponente (A) geeigneten Polyurethanpolymer vorzugsweise in Mengen von 5 Gew.-% bis 65 Gew.-%, bevorzugt von 5 Gew.-% bis 60 Gew.-% enthalten, bezogen auf das Gesamtgewicht des Polyurethanpolymers (A).

Als Komponente (A3) Carboxylgruppen enthaltende Verbindungen, die als Aufbaukomponente für erfindungsgemäß eingesetzte Polyurethanpolymer (A) geeignet sind, sind z.B. Diaminoverbindungen bzw. Dihydroxyverbindungen, die zusätzlich Carboxylgruppen tragen. Beispiele für derartige Verbindungen sind Dimethylolpropionsäure, Dimethylolbuttersäure und / oder Umsetzungsprodukte im Sinne einer Michaeladdition von 1 Mol Diamin wie z.B. 1,2-Ethandiamin oder Isophorondiamin mit 2 mol Acrylsäure oder Maleinsäure.

Besonders bevorzugt als Carboxylgruppen enthaltender Baustein geeignete wie die beschriebenen Bausteine (A3) in Komponente (A) ist Dimethylolpropionsäure.

Weitere Carboxylgruppen enthaltende Verbindungen, die als Komponente (A3) für das erfindungsgemäß eingesetzte Polyurethanpolymer (A) geeignet sind, sind beispielsweise Aminocarbonsäuren, die mindestens eine isocyanatreaktive Aminogruppe enthalten, und somit bei der Herstellung der als Komponente (A) geeignete Polyurethanpolymere durch Umsetzung mit der Komponente (A3) in das Polymer eingebaut werden. Geeignet sind lineare aliphatische, verzweigte aliphatische, aliphatischaromatische und aromatische Aminocarbonsäuren. Beispielhaft genannt als geeignete Verbindungen seien Aminocarbonsäuren mit einer primären oder sekundären Aminogruppe, wie Alanin, Lysin, Glutamin, 6-Aminohexansäure, Aminoundecansäure, 8-Aminooctansäure, 5-Aminopentansäure, 4-Aminobuttersäure, Aminobenzoesäure, 4-Aminomethylcyclohexancarbonsäure, 2-Aminohexansäure, 4-Aminocyclohexancarbonsäure, 12-Aminododecansäure, 9-Aminoononacarbonsäure.

Bevorzugt werden als Carboxylgruppenhaltige-Bausteine Aminocarbonsäuren geeignete Bausteine (A3) in Komponente (A) und besonders bevorzugt Aminoalkylcarbonsäuren wie 6-Aminohexansäure und/oder Lysin eingesetzt, die in über die Aminogruppe eingebauter Form im Polymer enthalten sind.

Die Carboxylgruppen aufweisenden Bausteine können anteilig auch direkt in Ihrer Salzform, als Carboxylat eingesetzt werden oder es können zur Salzbildung führende Neutralisationsmittel erst während oder nach der Herstellung der Polyurethane zugegeben werden

Für die Salzbildung besonders gut geeignete und bevorzugte tertiäre Amine sind z.B. Triethylamin, Dimethylcyclohexylamin, Ethyldiisopropylamin. Besonders bevorzugt wird Triethylamin eingesetzt.

Es können auch andere Amine zur Salzbildung eingesetzt werden, wie z.B. Ammoniak, Diethanolamin, Triethanolamin, Dimethylethanolamin, Methydiethanolamin, Aminomethylpropanol und auch Mischungen der genannten und auch anderer Amine. Sinnvollerweise werden diese Amine erst nach der weitgehenden Umsetzung der Isocyanatgruppen zugegeben.

Es ist auch möglich, anteilig andere Neutralisationsmittel wie z.B. Natrium-, Kalium-, und/oder Lithiumhydroxid für Neutralisationszwecke einzusetzen. Die Art und Menge an gegebenenfalls verwendeten Neutralisationsmitteln ist so zu wählen, dass in dem als Komponente (A) verwendeten Polymer noch Carboxylgruppen vorliegen.

Bevorzugt ist Komponente (A3) wenigstens eine isocyanatreaktive Komponente ausgewählt aus der Gruppe bestehend aus Aminocarbonsäuren, Hydroxycarbonsäuren und / oder einer Mischung aus mindestens zwei davon, vorzugsweise ausgewählt aus der Gruppe bestehend aus Dimethylolpropionsäure, Dimethylolbuttersäure, Lysin und / oder einer Mischung aus mindestens zwei davon.

Komponente (A3) ist in dem als Komponente (A) geeigneten Polyurethanpolymer vorzugsweise in Mengen von 0,25 Gew.-% bis 15 Gew.-%, bevorzugt von 0,25 Gew.-% bis 10 Gew.-% enthalten, bezogen auf das Gesamtgewicht des Polyurethanpolymers (A).

Geeignete Sulfonat- enthaltende Komponenten (A4) sind z.B. Diaminoverbindungen bzw. Dihydroxyverbindungen, die zusätzlich Sulfonat- und/oder Carboxylatgruppen tragen, wie beispielsweise die Natrium-, Lithium-, Kalium-, tert.-Amin-Salze der N-(2-Aminoethyl)-2-aminoethansulfonsäure, der N-(3-Aminopropyl)-2- aminoethansulfonsäure, der N-(3-Aminoproyl)-3-aminopropansulfonsäure, der N-(2-Aminoethyl)-3-aminopropansulphonsäure.

Bevorzugt Komponenten (A4) ist N-(2-Aminoethyl)-2-aminoethansulfonat.

Die Verbindungen werden bevorzugt direkt in Ihrer Salzform, als Sulfonat eingesetzt. Es ist jedoch auch möglich, die zur Salzbildung notwendigen Neutralisationsmittel anteilig oder ganz erst während oder nach der Herstellung der Polyurethane zuzugeben.

Komponente (A4) ist in dem als Komponente (A) geeigneten Polyurethanpolymer vorzugsweise zu 0 Gew.-% bis 10 Gew.-%, bevorzugt zu 0,5 Gew.-% bis 8 Gew.-% enthalten, bezogen auf das Gesamtgewicht des Polyurethanpolymers (A).

Geeignete Komponenten (A5) sind mono-, di-, trifunktionelle Amine und/oder mono-, di-, trifunktionelle Hydroxyamine, wie z.B. aliphatische und/oder alicyclische primäre und/oder sekundäre Monoamine wie Ethylamin, Diethylamin, die isomeren Propyl- und Butylamine, höhere linearaliphatische Monoamine und cycloaliphatische Monoamine, wie Cyclohexylamin. Weitere Beispiele sind Aminoalkohole, d. h. Verbindungen, die in einem Molekül Amino- und Hydroxylgruppen enthalten, wie z. B. Ethanolamin, N-Methylethanolamin, Diethanolamin, Diisopropanolamin, 1,3-Diamino-2-propanol, N-(2-Hydroxyethyl)-ethylendiamin, N,N-Bis(2-Hydroxyethyl)-ethylendiamin und 2-Propanolamin. Weitere Beispiele sind Diamine und Triamine wie z.B. 1,2-Ethandiamin, 1,6-Hexamethylendiamin, 1-Amino-3,3,5-trimethyl-5-aminomethyl-cyclohexan (Isophorondiamin), Piperazin, 1,4-Diaminocyclohexan, Bis-(4-aminocyclohexyl)-methan und Diethylentriamin. Weiterhin kommen Adipinsaeuredihydrazid, Hydrazin bzw. Hydrazinhydrat in Frage. Selbstverständlich können auch Mischungen mehrerer der genannten, ggf. auch zusammen mit nicht genannten Verbindungen e) eingesetzt werden.

Bevorzugte Komponenten (A5) sind 1,2-Ethandiamin, 1-Amino-3,3,5-trimethyl-5-aminomethylcyclohexan, Diethylentriamin, Diethanolamin, Ethanolamin, N-(2-Hydroxyethyl)-ethylendiamin und N,N-Bis(2-Hydroxyethyl)-ethylendiamin.

Komponenten (A5) dienen als Kettenverlängerungsmittel bevorzugt dazu, höhere Molekulargewichte aufzubauen oder als monofunktionelle Verbindungen Molekulargewichte zu begrenzen und/oder ggf. zusätzlich weitere reaktive Gruppen, wie z.B. freie Hydroxylgruppen als weitere Vemetzungsstellen einzubauen.

Bevorzugt ist Komponente (A5) mindestens eine Komponente ausgewählt aus der Gruppe bestehend aus einer mono-amino-funktionellen Verbindung, di-amino-funktionellen Verbindung, tri-amino-funktionellen Verbindung, und / oder einer Mischung aus mindestens zwei davon, wobei die Komponente (A5) verschieden von den Komponenten (A1), (A2), (A3) und (A4) ist

Bevorzugt ist Komponente (A5) eine Komponente ausgewählt aus der Gruppe bestehend aus Monoethanolamin, Diethanolamin, Hydroxyethylethandiamin und / oder einer Mischung aus mindestens zwei davon.

Komponente (A5) ist in dem als Komponente (A) geeigneten Polyurethanpolymer vorzugsweise in Mengen von 0 Gew.-% bis 10 Gew.-%, bevorzugt von 0 Gew.-% bis 5 Gew.-% enthalten, bezogen auf das Gesamtgewicht des Polyurethanpolymers (A).

Weitere Angaben zur Herstellung eines Carboxylgruppen enthaltenden Polyurethans können der Patentschrift EP3502157A1 und EP2186841A1 und EP3795601A1 entnommen werden.

Die als Komponente (A) geeigneten Polyurethanpolymere können als Feststoff Lösung oder als Dispersion in einem flüssigen Medium vorliegen und eingesetzt werden. Vorzugsweise werden die Polyurethanpolymere als wässrige Dispersionen bereitgestellt. Solche als Komponente (A) geeigneten Polyurethan-Dispersionen weisen vorzugsweise nichtflüchtiger Anteile von 15 Gew.-% bis 70 Gew.-%, bevorzugt von 20 Gew.-% bis 60 Gew.-% auf, bezogen auf das Gesamtgewicht der wässrigen Dispersion. Der pH-Wert liegt vorzugsweise im Bereich von 4 bis 11, bevorzugt 5 bis 8 bei

einer Temperatur von 23°C. Die mittleren Teilchengrößen gemessen durch Laserbeugung gemäß ISO 13320 (Laserbeugung) mit dem Malvern Mastersizer 3000 liegen üblicherweise im Bereich von 20 nm bis 750 nm, bevorzugt im Bereich von 30 nm bis 450 nm.

Als Komponente (A) geeignete Polyurethan-Dispersionen sind vorzugsweise anionisch stabilisierte Polyurethan-Dispersionen. Ein Beispiel für eine kommerzielle, im Handel erhältliche PolyurethanDispersionen die als Komponente (A) geeignet ist, Dispercoll® U 2824 von der Covestro Deutschland AG.

In einer bevorzugten Ausführungsform weist das mindestens eine Polyurethanpolymer (A) ein durchschnittliches Molekulargewicht (Mw) im Bereich von 20.000 g/mol bis 300.000 g/mol, vorzugsweise im Bereich von 20.000 g/mol bis 200.000 g/mol, besonders bevorzugt im Bereich von 20.000 g/mol bis 100.000 g/mol, noch bevorzugter im Bereich von 40.000 g/mol bis 80.000 g/mol auf, bestimmt gemäß DIN EN ISO 13885-2 (2021-11) mit N,N-Dimethlyacetamid als Eluent und Polystyrol als Standard.

In einer bevorzugten Ausführungsform weist das Polyurethanpolymer (A) eine partielle Säurezahl im Bereich von 2,5 mg KOH / g bis 25 mg KOH /g, vorzugsweise im Bereich von 2,5 mg KOH / g bis 12,5 mg KOH /g bestimmt gemäß DIN EN ISO 2114:2000 (2002-06, Verfahren A mit einem Aceton-Ethanol-Lösungsmittelgemisch), auf.

In einer bevorzugten Ausführungsform ist das Polyurethanpolymer (A) erhältlich oder wird erhalten durch die Umsetzung der folgenden Komponenten:

(A1)mindestens einer Diol- und/oder Polyolkomponente;

(A2)mindestens einer Di- und/oder Polyisocyanatkomponente;

(A3) mindestens einer isocyanatreaktive Komponente, die mindestens eine freie Carboxygruppe aufweist, wobei bevorzugt die isocyanatreaktive Komponente bis zu zwei Amino- und/oder Hydroxylgruppen und eine freie Carboxygruppe aufweist, wobei die isocyanatreaktive Komponente (A3) verschieden von den Komponenten (A1), (A2), (A4) und (A5) ist;

(A4) optional mindestens eine neutralisierte Sulfonsäuregruppe aufweisende Komponente, welche isocyanatreaktive Gruppen aufweist, wobei bevorzugt die isocyanatreaktive Gruppen bis zu zwei Amino- und/oder Hydroxylgruppen sind, wobei die Komponente (A4) verschieden von den Komponenten (A1), (A2), (A3) und (A5) ist;

(A5) optional mindestens eine Komponente ist ausgewählt aus der Gruppe bestehend aus einer mono-amino-funktionellen Verbindung, di-amino-funktionellen Verbindung, tri-amino-funktionellen Verbindung, und / oder einer Mischung aus mindestens zwei davon, wobei die Komponente (A5) verschieden von den Komponenten (A1), (A2), (A3) und (A4) ist.

In einer bevorzugten Ausführungsform ist das Polyurethanpolymer (A) erhältlich oder wird erhalten durch die Umsetzung der folgenden Komponenten:

(A1) wenigstens ein difunktionelles, teilkristallines oder kristallines, aliphatisches Polyesterpolyol mit einem Molekulargewicht (Mn) im Bereich von 400 bis 6000 g/mol, bestimmt gemäß DIN EN ISO 13885-1 (2021-11) mit Tetrahydrofuran als Eluent und Polystyrol als Standard;

(A2) wenigstens ein Diisocyanat ausgewählt aus der Gruppe bestehend aus Hexamethylendiisocyanat (HDI), 1-Isocyanato-3,3,5-trimethyl-5-isocyanatomethyl-cyclohexan (IPDI), Toluol-2,4-diisocyanat (TDI), Pentamethylendiisocyanat (PDI) und / oder einer Mischung aus mindestens zwei davon;

(A3) wenigstens eine isocyanatreaktive Komponente ausgewählt aus der Gruppe bestehend aus Aminocarbonsäuren, Hydroxycarbonsäuren und / oder einer Mischung aus mindestens zwei davon, vorzugsweise ausgewählt aus der Gruppe bestehend aus Dimethylolpropionsäure, Dimethylolbuttersäure, Lysin und / oder einer Mischung aus mindestens zwei davon;

(A4) optional das Natriumsalz der N-(2-Aminoethyl)-2-aminoethansulfonsäure;

(A5) optional eine Komponente ausgewählt aus der Gruppe bestehend aus Monoethanolamin, Diethanolamin, Hydroxyethylethandiamin und / oder einer Mischung aus mindestens zwei davon.

In einer bevorzugten Ausführungsform enthält das Polyurethanpolymer (A)

20 Gew.-% bis 94 Gew.-%, vorzugsweise 20 Gew.-% bis 90 Gew.-%, der Komponente A1;

5 Gew.-% bis 65 Gew.-%, vorzugsweise 5 Gew.-% bis 60 Gew.-%, der Komponente A2;

0,25 Gew.-% bis 15 Gew.-%, vorzugsweise 0,25 Gew.-% bis 10 Gew.-%, der Komponente A3;

0 Gew.-% bis 10 Gew.-%, vorzugsweise 0,5 Gew.-% bis 8 Gew.-%, der Komponente A4;

0 Gew.-% bis 10 Gew.-% der Komponente A5,

wobei die Summe der Bestandteile (A1), (A2), (A3), (A4) und (A5) 100 Gew.-% ergibt.

In einer bevorzugten Ausführungsform ist das Polyurethanpolymer (A) erhältlich oder wird erhalten durch die Umsetzung der Komponenten (A1), (A2), (A3), (A4) und (A5) in den folgenden Mengen:

20 Gew.-% bis 94 Gew.-%, vorzugsweise 20 Gew.-% bis 90 Gew.-%, der Komponente A1;

5 Gew.-% bis 65 Gew.-%, vorzugsweise 5 Gew.-% bis 60 Gew.-%, der Komponente A2;

0,25 Gew.-% bis 15 Gew.-%, vorzugsweise 0,25 Gew.-% bis 10 Gew.-%, der Komponente A3;

0 Gew.-% bis 10 Gew.-%, vorzugsweise 0,5 Gew.-% bis 8 Gew.-%, der Komponente A4;

0 Gew.-% bis 10 Gew.-% der Komponente A5,

wobei die Summe der Bestandteile (A1), (A2), (A3), (A4) und (A5) 100 Gew.-% ergibt.

In einer bevorzugten Ausführungsform beträgt der Anteil von Komponente (A) in der wässrigen Dispersion 40 Gew.-% bis 99,5 Gew.-%, vorzugsweise 70 Gew.-% bis 98,5 Gew.-%, bezogen auf gesamten Mengenanteile der Komponenten (A), (B) und (C) als 100 Gew.-%.

**Komponente (B)**

Die erfindungsgemäße wässrige Dispersion enthält als Komponente (B) mindestens ein Polycarbodiimid, mindestens ein Polyaziridin und/oder eine Mischung davon, wobei das mindestens eine Polycarbodiimid und das mindestens eine Polyaziridin eine Glasübergangstemperatur im Bereich von -150 °C bis 30 °C aufweisen, bestimmt gemäß DSC (differential scanning calometry) DIN EN ISO 11357-1 (2017-02).

In einer bevorzugten Ausführungsform enthält die erfindungsgemäße wässrige Dispersion als Komponente (B) mindestens ein Polycarbodiimid, wobei das mindestens eine Polycarbodiimid eine Glasübergangstemperatur im Bereich von -150 °C bis 30 °C aufweist, bestimmt gemäß DSC (differential scanning calometry) DIN EN ISO 11357-1 (2017-02).

Der Begriff "Carbodiimidgruppe" oder "Carbodiimidstruktureinheit" entspricht der chemischen Struktur -N=C=N-.

Als Polycarbodiimid werden erfindungsgemäß solche Verbindungen verstanden, die mehr als eine Carbodiimidstruktureinheit enthalten.

Geeignete Polycarbodiimide weisen vorzugsweise die Struktur der Formel I als Bestandteil der Molekülstruktur auf:

$$-\left[N=C=N-R\right]_n-$$

Formel (I)

worin n eine ganze Zahl von 2 oder mehr ist, vorzugsweise 2 bis 50, am meisten bevorzugt 3 bis 6; und R vorzugsweise eine oder mehrere der folgenden Gruppen ist: eine aliphatische organische Gruppe, eine alicyclische organische Gruppe und eine aromatische organische Gruppe, die C- und H-Atome enthält.

Geeignete Polycarbodiimide können durch allgemein bekannte Verfahren hergestellt werden, beispielsweise durch Decarboxylierungskondensation von Diisocyanaten, wie z.B. von aromatischen Diisocyanaten, aliphatischen Diisocyanaten und alicyclische Diisocyanaten. Bevorzugt eingesetzt wird eines oder mehrere der folgenden Diisocyanate: 1,5-Naphthalindiisocyanat, 4,4'-Diphenylmethandiisocyanat, 4,4'-Diphenyldimethylmethandiisocyanat, 1,3-Phenylendiisocyanat, 1,4-Phenylendiisocyanat, 2,4-Toluylendiisocyanat, 2,6-Toluylendiisocyanat, Hexamethylendiisocyanat, Cyclohexan-1, 4-Diisocyanat, Xylylendiisocyanat, Isophorondiisocyanat, Dicyclohexylmethan-4,4'-diisocyanat, Methylcyclohexandiisocyanat, Tetramethylxylylendiisocyanat, 3,3',5,5'-Tetraisopropyldiphenyl-4,4'-diisocyanat und 1,3,5-Triiso¬propylbenzol-2,4-diisocyanat ggf. Auch unter der Mitverwendung von monofunktionellen Isocyanaten wie z.B. Stearylisocyanat, Phenylisocyanat, Butylisocyanat, Hexylisocyanat oder/und höherfunktionellen Isocyanaten wie Trimere, Uretdione, Allophanate, Biurete der beispielhaft genannten Diisocyanate und anschließender, gleichzeitiger oder auch vorhergehender Umsetzung mit hydrophilierenden Komponenten, z.B. mono- oder difunktionelle Polyethern auf Basis von auf Alkoholen oder Aminen gestartete Ethylenoxid-Polymeren oder Ethylenoxid/Propylenoxid-Copolymeren erhalten werden.

Polycarbodiimide aufweisend Carbodiimidgruppen die aus aliphatischen, araliphatischen und/oder cycloaliphatischen Isocyanatgruppen hergestellt wurden sind bevorzugt, Polycarbodiimide aufweisend Carbodiimidgruppen die aus aliphatischen und/oder cycloaliphatischen Isocyanatgruppen hergestellt wurden sind besonders bevorzugt.

Besonders bevorzugte Polycarbodiimide werden durch Decarboxylierungskondensation von 1-Isocyanato-3,3,5-trimethyl-5-isocyanatomethyl-cyclohexan und/oder 4,4'-Diisocyanato-dicyclohexyl-methan erhalten.

Beispielsweise wird ein geeignetes Polycarbodiimid ausgehend von einem oder mehreren oben beschriebenen Diisocyanate unter Verwendung einer organischen Phosphorverbindung oder einer metallorganischen Verbindung als Katalysator in Abwesenheit eines Lösungsmittels oder in einem inerten Lösungsmittel bei einer Temperatur von etwa 70 °C durch eine Decarboxylierungskondensation hergestellt.

Bevorzugt erfolgt die Herstellung durch Erhitzen mindestens eines Diisocyanates in Gegenwart eines geeigneten Katalysators, wie z.B. Phospholinoxid, auf 100 bis 250°C solange unter Kohlendioxidabspaltung, bis der gewünschte Umsetzungsgrad erreicht ist. Der Verlauf der Reaktion kann beispielsweise durch die Abnahme der Konzentration von Isocyanatgruppen im Reaktionsgemisch verfolgt werden. Das so erhaltene Isocyanatgruppen enthaltende Reaktionsgemisch wird anschließend mit mindestens einem hydroxyfunktionellen Polyether auf Basis von Ethylenoxid bzw. auf Basis von Etyhlen- und Propylenoxid umgesetzt, wobei gegebenenfalls gleichzeitig bzw. anschließend eine Umsetzung mit weiteren hydroxy- und/oder aminofunktionellen und/oder anderen isocyanatreaktiven Verbindungen wie beispielsweise Butylglycol erfolgt und gegebenenfalls anschließend dispergiert, emulgiert oder gelöst wird.

Der Stand der Technik, der die Herstellung und Stabilisierung von Polycarbodiimiden beschreibt, kann den europäischen Patentanmeldungen EP 3 502 157 A1 und EP 2 552 982 A2 entnommen werden.

Geeignete Polycarbodiimide sind z.B. Carbodilite® SV-02, Carbodilite® V-02-L2 und Carbodilite® E-02 (alle von Nisshinbo Industries, Tokio, Japan) sowie Desmodur® 2802, von der Covestro Deutschland AG. Bevorzugte Polycarbodiimide sind Desmodur® 2802 und Carbodilite® V-02-L2, besonders bevorzugt ist Desmodur® 2802.

Als erfindungsgemäß einzusetzendes Polyaziridin eignen sich die dem Fachmann bekannten Verbindungen die über mehr als eine mit Carboxylgruppen reaktive Aziridingruppe enthalten. Beispiele für kommerziell erhältliche Polyaziridine sind PZ-28 und PZ-33 von Polyaziridine, LLC. Medford, N.J., USA, HD-105 von Shanghai Holdenchem CO, Ltd, Shanghai, China, und Neoadd Pax® 521, 523 und Crosslinker CX-100 von Covestro, und Xama 7 von ichemco Co, Italien. Besonders bevorzugt wird Crosslinker CX-100 von Covestro (Reaktionsmasse aus 2-Ethyl-2-[[3-(2-methylaziridin-1-yl) propionyl]methyl]propan-1,3-diyl bis(2-methylaziridin-1-propionat) und 2,2-bis({[3-(2-methylaziridin-1-yl)propanoyl]oxy} methyl)butyl 3-[2,2-bis({[3-(2-methylaziridin-1-yl)propanoyl]oxy}methyl)butoxy]propanoat) eingesetzt.

Das Polycarbodiimid und / oder das Polyaziridin kann in Form einer Dispersion, einer Lösung, eines Feststoff oder einer Flüssigkeit vorliegen und eingesetzt werden, bevorzugt wird es in Form einer wässrigen Dispersion eingesetzt.

In einer bevorzugten Ausführungsform ist Komponente (B) mindestens ein Polycarbodiimid. In einer weiteren bevorzugten Ausführungsform weist Komponente (B) ein durchschnittliches Molekulargewicht (Mw) im Bereich von 500 g/mol bis 100.000 g/mol, besonders bevorzugt im Bereich von 1.000 g/mol bis 50.000 g/mol, noch bevorzugter im Bereich von 2.000 g/mol bis 20.000 g/mol, noch mehr bevorzugter im Bereich von 2.000 g/mol bis 5.000 g/mol auf, bestimmt gemäß DIN EN ISO 13885-1 (2021-11) mit Tetrahydrofuran als Eluent und Polystyrol als Standard.

In einer bevorzugten Ausführungsform ist die mindestens eine Komponente (B) ein Polycarbodiimid und weist eine Glasübergangstemperatur von im Bereich von -100 °C bis 30 °C auf, bevorzugt im Bereich von - 60 °C bis 30 °C, besonders bevorzugt im Bereich von - 50 °C bis 29 °C bestimmt gemäß DSC (differential scanning calometry) DIN EN ISO 11357-1 (2017-02).

In einer bevorzugten Ausführungsform weist das mindestens eine Polycarbodiimid einen Gehalt an Carbodiimidgruppen (-N=C=N-) im Bereich von 0,5 mmol/g bis 5 mmol/g, bestimmt durch ATR-Infrarotspektroskopie gegen einen Dicyclocarbodiimid-Standard auf, bezogen auf das Gesamtgewicht des mindestens einen Polycarbodiimids.

In einer bevorzugten Ausführungsform ist das molare Verhältnis von Carbodiimidgruppen (-N=C=N-) in der Komponente (B) zu den Carboxylgruppen (-COOH) in der Komponente (A) im Bereich von 0,2:1 bis 5:1, bevorzugt im Bereich von 0,5:1 bis 2,9:1.

In einer bevorzugten Ausführungsform beträgt der Anteil von Komponente (B) in der wässrigen Dispersion 0,5

Gew.-% bis 40 Gew.-%, vorzugsweise 1,5 Gew.-% bis 30 Gew.-%, bezogen auf gesamten Mengenanteile der Komponenten (A), (B) und (C) als 100 Gew.-%.

**Komponente (C)**

Die erfindungsgemäße wässrige Dispersion kann gegebenenfalls als Komponente (C) mindestens ein weiteres Polymer enthalten, welches von dem mindestens einen Polymer (A) verschieden ist.

Als Komponente (C) eigenen sich beispielsweise Polyvinylester-, Polyvinylether-, Polyvinylakohol, Polyethylen-, Polystyrol-, Polybutadien-, Polyvinylchlorid-, Polyurethan-, Polyurethan-Polyharnstoff-, Polyurethan-Polyacrylat-, Polyester-, Polyacrylat- und/oder Copolymerisate davon. Die als Komponente (C) geeigneten Polymere können als Feststoff, Lösung oder als Dispersion in einem flüssigen Medium vorliegen und eingesetzt werden. Vorzugsweise als Dispersionen bzw. Emulsionen bzw. wässrige oder organische Lösung. Dispersionen enthaltend Komponente (C) können auch zusammen mit anderen wässrigen bzw. lösemittelhaltigen Oligomeren bzw. Polymeren gemischt und gemeinsam eingesetzt werden. Bei solchen Mischungen muss jeweils durch einfache Vorversuche die Verträglichkeit geprüft werden.

In einer bevorzugten Ausführungsform beträgt der Anteil von Komponente (C) in der wässrigen Dispersion 0 Gew.-% bis 50 Gew.-%, vorzugsweise 0 Gew.-% bis 28,5 Gew.-%, bezogen auf gesamten Mengenanteile der Komponenten (A), (B) und (C) als 100 Gew.-%.

In einer bevorzugten Ausführungsform weist das mindestens eine weitere Polymer (C) eine partiellen Säurezahl im Bereich von 0 mg KOH / g bis 1 mg KOH /g, vorzugsweise im Bereich von 0 mg KOH / g bis 0,05 mg KOH /g, jeweils bestimmt gemäß DIN EN ISO 2114:2000 (2002-06, Verfahren A mit einem Aceton-Ethanol-Lösungsmittelgemisch), auf.

In einer bevorzugten Ausführungsform weist das mindestens eine weitere Polymer (C) keine Carboxylgruppen und / oder Carboxylatgruppen auf. In einer bevorzugten Ausführungsform weist das mindestens eine weitere Polymer (C) keine nicht neutralisierten Säuregruppen auf.

In einer bevorzugten Ausführungsform ist das mindestens eine weitere Polymer (C) kristallin oder amorph. In einer weiteren bevorzugten Ausführungsform ist das mindestens eine weitere Polymer (C) kristallin oder amorph und weist keine Carboxylgruppen auf. In einer weiteren bevorzugten Ausfiihrungsform ist das mindestens eine weitere Polymer (C) kristallin oder amorph und weist keine Carboxylgruppen und / oder Carboxylatgruppen auf.

**Komponente (D)**

Die erfindungsgemäße wässrige Dispersion kann gegebenenfalls als Komponente (D) mindestens einen Zusatzstoff enthalten, der von den Komponenten (A), (B) und (C) verschieden ist.

Unter einen Zusatzstoff sind alle in der Beschichtungs- und Klebstofftechnologie bekannten Bindemitteln, Hilfsstoffen und Zugschlagstoffen, insbesondere Emulgatoren und Lichtschutzmitteln wie UV-Absorbern und sterisch gehinderte Aminen (HALS), weiterhin Antioxidantien, Füllstoffen und Hilfsmitteln, z.B. Antiabsetzmitteln, Entschäumungs- und/oder Netzmitteln, Verlaufshilfsmitteln, Reaktiv-Verdünnern, Weichmachern, Neutralisationsmitteln, Katalysatoren, Hilfslösemitteln und/oder Verdickern und Additiven, wie beispielsweise Pigmente, Farbstoffe oder Mattierungsmittel zu verstehen. Auch Klebrigmacher ("Tackifier") können als Zusatzstoff zugegeben werden. Die Zusatzstoffe sind unterschiedlich zu den Komponenten (A), (B) und (C).

Die Zusatzstoffe können den erfindungsgemäßen Produkten unmittelbar vor der Verarbeitung zugegeben werden. Sie können alleine oder mit den Komponenten (A), (B) und (C) zugegeben werden. Vorzugsweise werden die Komponenten (A), (B) und (C) als Dispersionen in einem wässrigen Medium zugegeben. Es ist aber auch möglich, zumindest einen Teil der Zusatzstoffe vor oder während der Dispergierung des Bindemittels zuzugeben.

Die Auswahl und die Dosierung dieser Stoffe, die den Einzelkomponenten und/oder der Gesamtmischung zugegeben werden können, sind dem Fachmann prinzipiell bekannt und können ohne ungebührlich hohen Aufwand auf den speziellen Anwendungsfall zugeschnitten durch einfache Vorversuche ermittelt werden.

Die Herstellung der erfindungsgemäßen wässrigen Dispersionen erfolgt bevorzugt durch Mischen der Komponenten miteinander. Die Komponenten (A), (B) und gegebenenfalls (C) und / oder (D) können beispielsweise als wässrige Dispersionen eingesetzt werden.

Bevorzugt umfasst die Herstellung der erfindungsgemäßen wässrigen Dispersion mindestens die Schritte:

i) Bereitstellen der Komponenten (A), (B), gegebenenfalls (C), gegebenenfalls (D), und gegebenenfalls ein wässriges Medium, wobei die Komponenten (A), (B), gegebenenfalls (C) und gegebenenfalls (D) jeweils unabhängig voneinander als wässrige Dispersion vorliegen können, und

ii) Mischen der in Schritt i) bereitgestellten Komponenten und gegebenenfalls Dispergieren in einem wässrigen Medium, um eine wässrige Dispersion zu erhalten.

Die Herstellung der erfindungsgemäßen wässrigen Dispersion, wie auch die Herstellung der einzelnen eingesetzten Lösungen oder Dispersionen, kann im Allgemeinen bei allen dem Fachmann als geeignet erscheinenden Bedingungen erfolgen, beispielsweise bei einer Temperatur von 18 bis 28 °C, idealerweise bei Raumtemperatur (23 °C), weiter bevorzugt in dem Fachmann bekannten Apparaturen, beispielsweise in Edelstahl-, Glas- oder in emaillierten verfahrenstechnischen Apparaten. Bei der Herstellung der erfindungsgemäßen wässrigen Dispersion sind Rostbildung und lösliche Metalllegierungen u.a. aus Aluminiumbehältern, zu vermeiden.

Die erfindungsgemäßen wässrigen Dispersionen kann durch Trocknung der Dispersion, bzw. durch den Entzug des Lösungsmittels in einen lagerstabilen und latent-reaktiven Klebstoff überführt werden. Eine Trocknung der Dispersion kann beispielsweise durch eine oder mehrere der folgenden Maßnahmen erfolgen: Infrarot-Wärmestrahlung, Nah-Infrarot-Wärmestrahlung, Mikrowellen und Verwendung eines Konvektionsofens bei erhöhter Temperatur.

Die Erfindung betrifft auch ein Verfahren zum Verbinden von mindestens zwei Substraten oder mindestens zwei Oberflächenbereichen eines Substrates, umfassend mindestens die Schritte

(i) Bereitstellen einer wässrigen Dispersion enthaltend mindestens die folgenden dispergierten Komponenten:

(A) mindestens ein teilkristallines oder kristallines Carboxylgruppen enthaltendes Polyurethanpolymer, welches eine Schmelztemperatur im Bereich von 35 bis 80 °C, eine Schmelzenthalpie von ≥ 15 J/g, jeweils bestimmt mittels DSC (differential scanning calometry) bei einer Aufheizrate von 20 K/min gemäß DIN EN ISO 11357-1:2017 (2017-02), und eine partielle Säurezahl im Bereich von 0,8 mg KOH / g bis 25 mg KOH /g, bestimmt gemäß DIN EN ISO 2114:2000 (2002-06, Verfahren A mit einem Aceton-Ethanol-Lösungsmittelgemisch), aufweist;

(B) mindestens ein Polycarbodiimid, mindestens ein Polyaziridin und/oder eine Mischung davon, wobei das mindestens eine Polycarbodiimid und das mindestens eine Polyaziridin eine Glasübergangstemperatur im Bereich von -150 °C bis 30 °C aufweisen bestimmt gemäß DSC (differential scanning calometry) DIN EN ISO 11357-1 (2017-02);

(C) gegebenenfalls mindestens ein weiteres Polymer, welches von dem mindestens einen Polymer (A) verschieden ist; und

(D) gegebenenfalls mindestens einen Zusatzstoff der von den Komponenten (A), (B) und (C) verschieden ist,

(ii) Applizieren der wässrigen Dispersion aus Schritt (i) auf mindestens einem Teil mindestens einer Oberfläche bzw. eines Oberflächenbereichs des mindestens einen Substrates, oder auf ein geeignetes Trägermedium zur Herstellung von selbstragenden Klebstofffilmen,

(iii) Trocknen der vorhandenen mindestens einen Dispersion aus Schritt (ii), um mindestens eine lagerstabile und latent-reaktive Klebstoffschicht oder einen lagerstabilen und latent-reaktiven selbsttragenden Klebstofffilm zu erhalten,

(iv) Lagern des mindestens einen Substrats oder des selbsttragenden Klebstofffilmes aus Schritt (iii) für einen Zeitraum von mindestens 8 Stunden, vorzugsweise von 8 Stunden bis 2400 Stunden, besonders bevorzugt von 8 Stunden bis 168 Stunden, bei einer Temperatur im Bereich von -40 °C bis 30 °C, und

(v) Inkontaktbringen der mindestens einen lagerstabilen und latent-reaktiven Klebstoffschicht mit mindestens einem weiteren Oberflächenbereich des mindestens einen Substrats, mit mindestens einem Teil eines weiteren Substrats oder mit mindestens einem Teil einer auf einem weiteren Substrat vorhandenen Klebstoffschicht, bei einer Temperatur im Bereich von 40 °C bis 200°C, bevorzugt von 50 bis 120 °C, besonders bevorzugt von 55 bis 100 °C oder Inkontaktbringen des selbsttragenden Klebstofffilmes mit mindestens zwei Substraten bei einer Temperatur im Bereich von 40 °C bis 200°C, bevorzugt von 50 bis 120 °C, besonders bevorzugt von 55 bis 100 °C.

In einer bevorzugten Ausführungsform betrifft die Erfindung auch ein Verfahren zum Verbinden von mindestens zwei Substraten, umfassend mindestens die Schritte

(i) Bereitstellen einer wässrigen Dispersion enthaltend mindestens die folgenden dispergierten Komponenten:

(A) mindestens ein teilkristallines oder kristallines Carboxylgruppen enthaltendes Polyurethanpolymer, welches eine Schmelztemperatur im Bereich von 35 bis 80 °C, eine Schmelzenthalpie von ≥ 15 J/g, jeweils bestimmt

mittels DSC (differential scanning calometry) bei einer Aufheizrate von 20 K/min gemäß DIN EN ISO 11357-1:2017 (2017-02), und eine partielle Säurezahl im Bereich von 0,8 mg KOH / g bis 25 mg KOH /g, bestimmt gemäß DIN EN ISO 2114:2000 (2002-06, Verfahren A mit einem Aceton-Ethanol-Lösungsmittelgemisch), aufweist;

(B) mindestens ein Polycarbodiimid, mindestens ein Polyaziridin und/oder eine Mischung davon, wobei das mindestens eine Polycarbodiimid und das mindestens eine Polyaziridin eine Glasübergangstemperatur im Bereich von -150 °C bis 30 °C aufweisen bestimmt gemäß DSC (differential scanning calometry) DIN EN ISO 11357-1 (2017-02);

(C) gegebenenfalls mindestens ein weiteres Polymer, welches von dem mindestens einen Polymer (A) verschieden ist; und

(D) gegebenenfalls mindestens einen Zusatzstoff der von den Komponenten (A), (B) und (C) verschieden ist,

(ii) Applizieren der wässrigen Dispersion aus Schritt (i) auf mindestens einem Teil mindestens einer Oberfläche bzw. eines Oberflächenbereichs des mindestens einen Substrates, oder auf ein geeignetes Trägermedium zur Herstellung von selbstragenden Klebstofffilmen,

(iii) Trocknen der vorhandenen mindestens einen Dispersion aus Schritt (ii), um mindestens eine lagerstabile und latent-reaktive Klebstoffschicht oder einen lagerstabilen und latent-reaktiven selbsttragenden Klebstofffilm zu erhalten,

(iv) Lagern des mindestens einen Substrats oder des selbsttragenden Klebstofffilmes aus Schritt (iii) für einen Zeitraum von mindestens 8 Stunden, vorzugsweise von 8 Stunden bis 2400 Stunden, besonders bevorzugt von 8 Stunden bis 168 Stunden, bei einer Temperatur im Bereich von -40 °C bis 40 °C, und

(v) Inkontaktbringen der mindestens einen lagerstabilen und latent-reaktiven Klebstoffschicht mit mindestens einem weiteren Oberflächenbereich des mindestens einen Substrats, mit mindestens einem Teil eines weiteren Substrats oder mit mindestens einem Teil einer auf einem weiteren Substrat vorhandenen Klebstoffschicht, bei einer Temperatur im Bereich von 40 °C bis 200°C, bevorzugt von 50 bis 120 °C, besonders bevorzugt von 55 bis 100 °C oder Inkontaktbringen des selbsttragenden Klebstofffilmes mit mindestens zwei Substraten bei einer Temperatur im Bereich von 40 °C bis 200°C, bevorzugt von 50 bis 120 °C, besonders bevorzugt von 55 bis 100 °C.

Die vorliegende Erfindung betrifft auch ein Verfahren zur Herstellung einer Klebung von mindestens einem Substrat, vorzugsweise von mindestens zwei Substraten, wobei eine wässrige Dispersion auf mindestens ein Substrat appliziert, dann getrocknet, gegebenenfalls für einen Zeitraum von mindestens 8 Stunden, vorzugsweise von 8 Stunden bis 2400 Stunden, besonders bevorzugt von 8 Stunden bis 168 Stunden, bei einer Temperatur im Bereich von -40 °C bis 30 °C gelagert wird und gegebenenfalls auf eine Temperatur im Bereich von 40°C bis 200°C, bevorzugt 50°C bis 120°C, besonders bevorzugt 55°C bis 100°C erhitzt wird und anschließend ein Kleben erfolgt; wobei die wässrige Dispersion mindestens die folgenden dispergierten Komponenten enthält:

(A) mindestens ein teilkristallines oder kristallines Carboxylgruppen enthaltendes Polyurethanpolymer, welches eine Schmelztemperatur im Bereich von 35 bis 80 °C, eine Schmelzenthalpie von ≥ 15 J/g, jeweils bestimmt mittels DSC (differential scanning calometry) bei einer Aufheizrate von 20 K/min gemäß DIN EN ISO 11357-1:2017 (2017-02), und eine partielle Säurezahl im Bereich von 0,8 mg KOH / g bis 25 mg KOH /g, bestimmt gemäß DIN EN ISO 2114:2000 (2002-06, Verfahren A mit einem Aceton-Ethanol-Lösungsmittelgemisch), aufweist;

(B) mindestens ein Polycarbodiimid, mindestens ein Polyaziridin und/oder eine Mischung davon, wobei das mindestens eine Polycarbodiimid und das mindestens eine Polyaziridin eine Glasübergangstemperatur im Bereich von -150 °C bis 30 °C aufweisen, bestimmt gemäß DSC (differential scanning calometry) DIN EN ISO 11357-1 (2017-02);

(C) gegebenenfalls mindestens ein weiteres Polymer, welches von dem mindestens einen Polymer (A) verschieden ist; und

(D) gegebenenfalls mindestens einen Zusatzstoff der von den Komponenten (A), (B) und (C) verschieden ist.

Das Substrat ist vorzugsweise eines oder mehrere der folgenden Ausführung: Holz, Kunststoff, Metalle und

Legierungen, Spannplatten, MDF-Platten, Keramik, Stein, Beton, Bitumen, Hartfaser, Glas, Glasfasern, Kohlenstofffasern, Kohlenstoffnanoröhrchen, Porzellan, Kunststoffen, Leder, Textilien und/oder textilen Fasern der verschiedensten Art, Gewebe, Kunstleder, Papier, Pappe, EVA, Gummi, Lederhaut, Ethylen-Vinylacetat-Copolymer, Polyolefin, thermoplastisches Polyurethan, Polyurethanschaum, Polymerfasern und Graphitfasern.

Die Substrate können vorbehandelt werden, um die Haftung des Klebefilms auf dem Substrat zu verbessern. Nützliche Vorbehandlungen sind z.B. Korona, Plasma, Flamme, chemische Grundierung, und Kombinationen davon.

Die erfindungsgemäße wässrige Dispersion und der erfindungsgemäße Klebstoff eignen sich ebenfalls zum Kleben von Gummimaterialien wie z. B. Natur- und Synthesekautschuken, verschiedenen Kunststoffen wie Polyurethanen, Polyvinylacetat, Polyvinylchlorid, insbesondere weichmacherhaltigem Polyvinylchlorid. Die erfindungsgemäße wässrige Dispersion und die erfindungsgemäßen Klebstoffe sind ebenfalls geeignet für das Verkleben von thermoplastischen Kunststoffen wie z.B. ABS (Acryl-Butadien-Styrol), PC (Polycarbonat) und deren Mischungen, sowie polyolefinischen Kunststoffen ggf. nach geeigneter Vorbehandlung.

Die Verarbeitung der erfindungsgemäßen wässrigen Dispersion erfolgt nach den bekannten Methoden der Beschichtungstechnologie bzw. Klebstofftechnologie bezüglich der Anwendungen und Verarbeitung von wässrigen Dispersionen bzw. wässrigen Emulsionen bzw. wässrigen Lösungen.

Das "Auftragen" oder "Applizieren" kann bedeuten, dass die wässrige Dispersion bzw. der Klebstoff auf die gesamte Oberfläche des Substrats oder nur auf einen oder mehrere Teile der Substratoberfläche aufgetragen wird.

Das "Auftragen" oder "Applizieren" kann durch Streichen, Tauchen, Sprühen, Walzen, Rakeln, Flie-ßen, Gießen, Drucken oder Transferdruck erfolgen, vorzugsweise durch Streichen, Tauchen oder Sprühen.

Das "Trocknen der Substratoberfläche bzw. des Substrats, auf die der Klebstoff aufgetragen wird" kann sich nur auf das Erhitzen und Trocknen der Substratoberfläche oder auf das Erhitzen und Trocknen eines Teils oder des gesamten Substrats einschließlich der Substratoberfläche, auf die der Klebstoff aufgetragen wird, beziehen.

Durch das "Trocknen" kann ein flüchtiger Bestandteil entfernt werden. Bei der flüchtigen Komponente kann es sich um Wasser handeln.

Vorzugsweise wird beim "Trocknen" Wasser entfernt.

Vorzugsweise weisen die nach dem Trocknen erhaltenen Klebstoffschichten einen nichtflüchtigen Anteil von mehr als 95 Gew.-%, besonders bevorzugt mehr als 98 Gew.-%, ganz besonders bevorzugt von mehr als 99 Gew.-% auf, gemäß DIN EN ISO 3251 (2019-09), Einwaage 1 g, Trocknung für 1 h bei 125 °C.

Das "Trocknen" erfolgt vorzugsweise durch eine oder mehrere der folgenden Maßnahmen: Infrarot-Wärmestrahlung, Nah-Infrarot-Wärmestrahlung, Mikrowellen und Verwendung eines Konvektionsofens bei erhöhter Temperatur.

Die Heiztemperatur ist so hoch wie möglich, sollte aber nicht über der Temperaturgrenze liegen, bei der das Substrat unkontrolliert verformt oder anderweitig beschädigt wird.

Bei der Verwendung der erfindungsgemäßen wässrigen Dispersion z.B. für Klebstoffe zum Kleben von Substraten, sowie der erfindungsgemäßen Klebstoffe, wird häufig nach dem Thermoaktivierverfahren gearbeitet. Hierbei wird die Klebstoffschicht durch Erwärmen, z. B. mit einem Infrarotstrahler, aktiviert und in einen klebfähigen Zustand überführt. Die Temperatur, bei der der Klebstofffilm klebrig wird, bezeichnet man als Aktiviertemperatur.

Das "Lagern" des mit der erfindungsgemäßen wässrigen Dispersion bzw. des erfindungsgemäßen Klebstoffs beschichteten Substrats oder des selbsttragenden Klebstofffilmes erfolgt für einen Zeitraum von mindestens 8 Stunden, vorzugsweise von 8 Stunden bis 2400 Stunden, besonders bevorzugt von 8 Stunden bis 168 Stunden, bei einer Temperatur im Bereich von -40 °C bis 30 °C.

Das "Inkontaktbringen" erfolgt vorzugsweise, bevor die Temperatur der Substratoberfläche niedriger ist als die Temperatur, bei der der Klebstoff klebbar ist, und vorzugsweise, bevor die Temperatur der Substratoberfläche nicht unter 55 °C liegt.

Die in Schritt iii behandelte Substratoberfläche wird vorzugsweise nach der Lagerung mit dem Substrat selbst oder einem zusätzlichen Substrat in Kontakt gebracht, um das gefügte/geklebte Produkt zu erhalten.

Das zusätzliche Substrat kann jedes beliebige Substrat sein, das geklebt werden muss.

Das zusätzliche Substrat kann mit dem Substrat identisch sein oder sich von ihm unterscheiden.

Wie das Substrat wird auch das zusätzliche Substrat vorzugsweise beschichtet, erhitzt und mit Wärme aktiviert.

Nach dem Inkontaktbringen der behandelten Substratoberfläche mit dem Substrat selbst oder dem zusätzlichen Substrat in Schritt (v) kann eine weitere Kühlbehandlung durchgeführt werden, um die Temperatur des verklebten Produkts auf Raumtemperatur zu senken.

Die Methode der Wärmezufuhr ist vorzugsweise eine oder mehrere der Folgenden: Verwendung eines Konvektionsofens oder Infrarot-Wärmestrahlung, Nahinfrarot-Wärmestrahlung, Mikrowellen und Wärmeübertragung durch einen Gegenstand, der mit dem mit dem erfindungsgemäßen Klebstoff beschichteten Substrat in Kontakt kommt.

Ein weiterer Gegenstand der vorliegenden Erfindung sind mindestens zwei miteinander verbundene Substrate erhältlich oder erhalten durch das erfindungsgemäße Verfahren.

Ein weiterer Gegenstand der vorliegenden Erfindung ist ein Substrat bei dem mindestens zwei seiner Oberflächenbereich miteinander verbunden sind erhältlich oder erhalten durch das erfindungsgemäße Verfahren.

Ein weiterer Gegenstand der vorliegenden Erfindung ist ein Klebstoffverbund, umfassend mindestens zwei Substrate und einen/eine zwischen jeweils den mindestens zwei Substraten vorhandenen Klebstoff oder Klebstoffschicht und / oder ein Substrat und einen/eine zwischen mindestens zwei Oberflächenbereichen des Substrats vorhandenen Klebstoff oder Klebstoffschicht, erhalten oder erhältlich durch die erfindungsgemäße Verwendung oder das erfindungsgemäße Verfahren.

Ein weiterer Gegenstand der vorliegenden Erfindung ist die Verwendung der erfindungsgemäßen lagerstabilen und latent-reaktiven Klebstoffe zum Kleben von Holz, Papier, thermoplastischen Kunststoffen, elastomeren Kunststoffen, thermoplastisch-elastomeren Kunststoffen, Vulkanisaten, textilen Geweben, Gewirken, Geflechten, Leder, Metallen, Keramik, Asbestzement, Steinzeug, Beton, Schaumstoffen, jeweils miteinander und/oder an porige Substrate, bevorzugt mit einer Dichte von weniger als 1 kg/Liter, insbesondere zum Kleben von Schaumstoffen in der Matratzen-, Möbel- und/oder Polsterherstellung.

Die erfindungsgemäße wässrigen Dispersion kann auch auf Trennpapier (z. B. Silikonpapier oder polyolefinisch antihaftend ausgerüsteten Papier oder ähnlichen Trägermaterialien) im Sprüh-, Rakel, Pinsel-, oder Walzenauftragsverfahren appliziert werden. Nach dem Trocknen erhält man selbsttragende latent-reaktive Filme oder Vliese, die ggf. nach Einlegen eines Trennpapiers, aufgewickelt und bis zum Einsatz als Klebstofffilm gelagert werden können.

Aus der erfindungsgemäßen wässrigen Dispersion kann durch geeignete technische Verfahren ein latent-reaktives Klebstoffpulver in Form eines Granulates oder Pulvers gewonnen werden.

Zum Beispiel kann die erfindungsgemäße wässrige Dispersion durch Sprühtrocknung vom Wasser befreit werden. Man erhält so ein latent-reaktive Klebstoffpulver, die ggf. durch einen sich anschließenden Mahlprozess auf kleine Partikelgrößen gemahlen werden können.

Eine weitere Möglichkeit zur Herstellung latent-reaktiver Pulver besteht im Ausfrieren zumindest eines Teil der in der erfindungsgemäßen wässrige Dispersion enthaltenen Bestandteilen bei Temperaturen unterhalb von 0°C. Dabei anfallende Feststoffe werden anschließend vom Wasser durch Filtration, Zentrifugieren etc. weitgehend befreit und abschließend getrocknet. Das erhaltene grobkörnige Pulver kann dann durch geeignete Mahlung z.B. in Kugel-, Perl-, Sandmühlen oder Strahlmühlen auf die geforderten Partikelgrößen gebracht werden.

Ein weiterer Gegenstand der vorliegenden Erfindung ist ein Artikel erhalten oder erhältlich durch die erfindungsgemäße Verwendung oder das erfindungsgemäße Verfahren, wobei der Artikel vorzugsweise ein mit thermoplastischer Folie laminiertes Formteil, vorzugsweise aus Kunststoff, Holz oder einem Holzwerkstoff wie beispielsweise MDF ist.

In einer weiteren bevorzugten Ausführungsform handelt es sich bei dem Artikel um einen Schuhoder ein Möbelstück. Zudem kann der hier entwickelte erfindungsgemäße wässrige Dispersion bzw. der erfindungsgemäße Klebstoff auch in weiteren Anwendungen zum Einsatz kommen, wie z.B. bei der Verklebung von Automobil-Innenteile.

Die erfindungsgemäßen Klebstoffe können auch mit ferromagnetischen Partikeln ausgerüstet sein. Auf diese Weise kann die Erwärmung des Klebstoffpolymers auch durch Induktion erfolgen. Ebenso ist die Erwärmung mit Mikrowellen möglich.

## Beispiele

Die vorliegende Erfindung wird anhand der nachfolgenden Beispiele weiter erläutert, ohne darauf beschränkt zu sein.

### *Rohstoffe und Reagenzien*

Polyester I: Polyesterdiol aus 1,4-Butandiol und Adipinsäure, OH-Zahl 50

Polyester II: Polyesterdiol aus 1,6-Hexandiol, Neopentylglycol und Adipinsäure, OH-Zahl 56

Polyester III: Polyesterdiol aus 1,6-Hexandiol und Phthalsäureanhydrid, OH-Zahl 56

Desmodur® H: Hexamethylendiisocyanat-1,6 (Covestro Deutschland AG, Leverkusen/DE)

Desmodur® I: Isophorondiisocyanat (Covestro Deutschland AG, Leverkusen/DE)

Lucramul® 1820 liq: Emulgator, 15 gew.-%ige Lösung von Stearylalkoholpolyglykolether in Wasser (LEVACO Chemicals GmbH, Leverkusen).

Dispercoll® U 2824 (Covestro Deutschland AG, Leverkusen/D) ist eine carboxylatstabilisierte Polyesterpolyurethan-Dispersion enthaltend Dimethylpropionsäure als Aufbaukomponente (nichtflüchtiger Anteil der Dispersion 40%). Das enthaltene Polymer ist in der DSC-Messung teilkristallin. Die Polyurethandispersion besitzt eine partielle Säurezahl von 4,0 mg KOH/g. Die partielle Säurezahl des getrockneten Polymers ist 10 mg KOH/g. Das getrocknete Dispersionspolymer besitzt eine Schmelzenthalpie von 51 J/g und eine Schmelztemperatur von ca. 47 °C. Das mittlere Molekulargewicht Mw ist 65.000 g/mol.

Dispercoll® U XP 2643 (Covestro Deutschland AG, Leverkusen/D) ist eine carboxylatstabilisierte Polyurethan-Dispersion auf Basis eines Polyethers und Dimethylpropionsäure (nichtflüchtiger Anteil der Dispersion 40%). Das getrocknete Polymer weist in der DSC-Messung keinen Schmelzpeak auf, die Glasübergangstemperatur ist - 51 °C. Das Produkt besitzt eine Säurezahl von 4,0 mg KOH/g. Die partielle Säurezahl des getrockneten Polymers ist 10 mg KOH/g. Das mittlere Molekulargewicht Mw ist 64.000 g/mol.

Desmodur® 2802 ist ein hydrophil modifiziertes Polycarbodiimid mit einem nichtflüchtigen Anteilvon 40 Gew.-%, einem Carbodiimidgruppengehalt von etwa 1,4 meq DCC/g), , einem gewichtsmittleren Molekulargewicht Mw von 3258 und einer durchschnittlichen Carbodiimidgruppenfunktionalität von 4,5, bezogen von Covestro AG. Aus dem nichtflüchtigen Anteil und dem Carbodiimidgruppengehalt berechnet sich eine Carbodiimidkonzentration von 3,5 meq DCC für das getrocknete Polycarbodiimid. Die Glasübergangstemperatur ist -30°C.

***Herstellung von Carboxylgruppen enthaltenden Polyurethandispersionen***

**Dispersion 1**

450 g Polyester 1 und 2,3 g Dimethylolpropionsäure wurden 1 Stunde bei 110°C und 15 mbar entwässert. Bei 80°C wurden 22,5 g Desmodur® I und 34,0 g Desmodur® H zugegeben und die Mischung wurde bei 90°C gerührt, bis ein konstanter Isocyanatgehalt von 1,4 % erreicht wurde. Das Reaktionsgemisch wurdr in 763 g Aceton gelöst und dabei auf 48°C abgekühlt. In die homogene Lösung wurde eine Lösung aus 9,1 g Natriumsalz der N-(2-Aminoethyl)-2-aminoethansulfonsäure und 3,8 g Lysin und 2,7 g Diethanolamin in 75,0 g Wasser unter kräftigem Rühren gegeben. Nach 30 Minuten wurde durch Zugabe von 672 g Wasser dispergiert. Nach destillativer Abtrennung des Acetons wurde eine wässrige Polyurethan-Polyharnstoff-Dispersion mit einen Feststoffgehalt von 39,8 Gew.-% erhalten. Das enthaltene Polymer ist nach der Trocknung teilkristallin mit einem Glasübergang bei einer Glastemperatur Tg von -53°C, einer Schmelztemperatur von 48°C und einer Schmelzenthalpie von 49 J/g. Die partielle Säurezahl der Dispersion ist 1,80 mg KOH/g.

**Dispersion 2**

439,4 g Polyester I wurden 1 Stunde bei 110°C und 15 mbar entwässert. Bei 80°C wurden 20,4 g Desmodur® I und 30,9 g Desmodur® H zugegeben und die Mischung weiter bei 90°C gerührt, bis ein konstanter Isocyanatgehalt von 1,3 % erreicht ist. Das Reaktionsgemisch wurde in 677 g Aceton gelöst und dabei auf 48°C abgekühlt. In die homogene Lösung wurde eine Lösung aus 8,2 g Natriumsalz der N-(2-Aminoethyl)-2-aminoethansulfonsäure, 3,4 g Lysin und 2,7 g Diethanolamin in 67,5 g Wasser unter kräftigem Rühren gegeben. Nach 30 Minuten wurde durch Zugabe von 652 g Wasser dispergiert. Nach destillativer Abtrennung des Acetons wurde eine wässrige Polyurethan-Polyharnstoff-Dispersion mit einen Feststoffgehalt von 40 Gew.-% erhalten. Das enthaltene Polymer ist nach der Trocknung teilkristallin mit einem Glasübergang bei einer Glastemperatur Tg von -50°C, einer Schmelztemperatur von 49°C und einer Schmelzenthalpie von 47 J/g. Die partielle Säurezahl der Dispersion ist 0,95 mg KOH/g.

***<u>Herstellung des Klebstoffs</u>***

In ein Plastikbecher mit verschraubbarem Deckel werden die in der Tabelle 1 genannten Bestandteile der wässrigen Klebstoffdispersionen nacheinander eingewogen. Die Vermischung erfolgt bei 1000 Umdrehungen pro Minute für 3 Minuten im Speedmixer®.

Man erhält niedrigviskose wässrige Klebstoffformulierungen, die auch nach mehreren Wochen Lagerung bei Normbedingungen keine Anzeichen von Viskositätsanstieg oder Sedimentation zeigen.

***<u>Test-Verfahren</u>***

Alle analytischen Bestimmungen und Test-Verfahren beziehen sich, soweit nicht anders angegeben. auf eine Temperatur von 23° C.

*Ermittlung der partiellen Säurezahl*

Die Bestimmung der partiellen Säurezahl erfolgt gemäß DIN EN ISO 2114:2000 (2002-06, Verfahren A), wobei an Stelle des unter 5.1 beschriebenen Lösemittelgemisches aus 2 Volumenteilen Toluol (5.7) und 1 Volumenteil Ethanol (5.5) ein Lösemittelgemisch aus 2 Volumenteilen Aceton (5.4) und 1 Volumenteil Ethanol (5.5) verwendet wurde.
Zur Bestimmung der Säurezahl der Polymerdispersionen wurden diese, wenn nicht anders vermerkt direkt eingesetzt. Die verwendeten Probenmengen richteten sich nach den Angaben unter 7.1.
Die partielle Säurezahl des getrockneten Polymers entspricht der unter 8.1.2 beschriebenen partiellen Säurezahl des Festharzes und wird analog berechnet.

*Ermittlung der nicht-flüchtigen Anteile*

Der Ermittlung der nicht-flüchtigen Anteile der Polymerdispersionen erfolgte nach DIN EN ISO 3251, Einwaage 1 g, Trocknung für 1 h bei 125 °C.

*Ermittlung der Glasübergangstemperaturen, Schmelztemperaturen und Schmelzenthalpien mittels Differential Scanning Calorimetry (DSC)*

Die Glasübergangstemperaturen, Schmelztemperaturen und Schmelzenthalpien wurden mittels Differential Scanning Calorimetry (DSC) mit einem Kalorimeter DSC Q2000 der Fa. TA Instruments bestimmt.
Die Bestimmung erfolgt gemäß DIN EN ISO 11357-1:2017 (2017-02) - Kunststoffe - Dynamische Differenz-Thermoanalyse (DSC) -Teil 1: Allgemeine Grundlagen (ISO 11357-1:2016); Deutsche Fassung EN ISO 11357-1:2016 und den Normteilen
DIN EN ISO 11357-2:2020-08 - Kunststoffe -Dynamische Differenzkalorimetrie (DSC) -Teil 2: Bestimmung der Glasübergangstemperatur und der Glasübergangsstufenhöhe (ISO 11357-2:2020); Deutsche Fassung EN ISO 11357-2:2020
DIN EN ISO 11357-3:2018-07 - Kunststoffe - Dynamische Differenz-Thermoanalyse (DSC) - Teil 3: Bestimmung der Schmelz- und Kristallisationstemperatur und der Schmelz- und Kristallisationsenthalpie (ISO 11357-3:2018).

*Probenvorbereitung für wässrige Dispersionen*

Dazu wurde ein Film durch Rakeln der Dispersion mit 100 μm Nassfilmdicke auf einer Glasplatte hergestellt, 2 Stunden lang bei 23°C und 50% relativer Luftfeuchte vorgetrocknet, die beschichtete Glasplatte wird anschließend in eine Trockenbox überführt und dort für 3 Tage bei 23°C und 0% relativer Luftfeuchte gelagert.
Die beschichtete Glasplatte wird aus der Trockenbox entnommen und ca. 5 mg Probenmaterial für die DSC Messung verwendet.
Es wird folgendes Messprogramm durchgeführt
Schnelle Abkühlung auf die Starttemperatur -100 °C, danach Beginn von drei Aufheizungen von - 100 °C bis +150 °C mit einer Heizrate von 20 K/min und einer Kühlrate von 320 K/min unter Stickstoff-Atmosphäre und Kühlung mit flüssigem Stickstoff.

*Ermittlung der Glasübergangstemperaturen*

Die Ermittlung der Glasübergangstemperaturen (Tg) erfolgte gemäß den Angaben DIN EN ISO 11357-2:2020-08
Die Glastemperatur entspricht der Temperatur bei halber Höhe des Glasübergangs, wobei die dritte Aufheizung ausgewertet wurde. Sollte sich keine Glasübergangstemperatur ermitteln lassen, wird das Messprogramm wie folgt geändert. Schnelle Abkühlung auf die Starttemperatur -140 °C, danach Beginn von drei Aufheizungen von -140 °C bis +150 °C mit einer Heizrate von 20 K/min und einer Kühlrate von 320 K/min.

*Ermittlung der Schmelztemperaturen*

Zur Ermittlung der Schmelztemperaturen wird die erste Aufheizung herangezogen, die angegebenen Schmelztemperaturen entsprechen den Peakkristallisationstemperaturen.

*Ermittlung der Schmelzenthalpien*

Zur Ermittlung der Schmelzenthalpien wird die erste Aufheizung herangezogen. Im Falle mehrerer Schmelzpeaks werden die Schmelzenthalpien aller Schmelzpeaks mit einer Peakschmelztemperatur Tp,m im Bereich von 15 bis 80 C addiert. Peaks mit Schmelzenthalpien von >0,9 J/g werden nicht betrachtet.

*Bestimmung des Molekulargewichts*

Die Bestimmung des Molekulargewichtes Mn, Mw, Mz erfolgt, wenn nicht anders angegeben gemäß DIN EN ISO 13885-2:2021-11 mit N,N-Dimethlyacetamid als Eluent gegen einen Polystyrolstandard.

Die Bestimmung des Molekulargewichtes Mn, Mw, Mz der Polycarbodiimide erfolgt, wenn nicht anders angegeben gemäß DIN EN ISO 13885-1:2021-11 mit Tetrahydrofuran als Eluent gegen einen Polystyrolstandard.

*Berechnung des molaren Verhältnis von Carbodiimidgruppen (-N=C=N-) in der Komponente B) zu den Carboxylgruppen (-COOH) in der Komponente (A)*

Das molaren Verhältnis von Carbodiimidgruppen (-N=C=N-) in der Komponente B) zu den Carboxylgruppen (-COOH) in der Komponente (A) CDI/COOH wird berechnet aus der Stoffmenge der Carbodiimidgruppen nCDI [meq DCC] in der Komponente (B) und der Stoffmenge der Carboxylgruppen nCOOH [mmol/g] der Komponente (A).

Die Stoffmenge der COOH Gruppen nCOOH in der Komponente (A) wird anhand folgender Formel berechnet:

$$\text{nCOOH} = \text{partielle Säurezahl [mg KOH / g] x Masse [g] / 56,1[mmol / mg KOH]}$$

Sollte die Komponente (A) aus mehreren Polymeren bestehen, kann so für jedes Polymer die Stoffmenge berechnet und die einzelnen Stoffmengen addiert werden.

*Bestimmung der Carbodiimidkonzentration in der Komponente B*

Die Bestimmung der Carbodiimid-Konzentration erfolgt mit ATR-Infrarotspektroskopie am Gerät Perkin Elmer Spectrum two.

Zunächst wird Dicyclohexylcarbodiimid (DCC) in Ethanol gelöst (Konzentrationen: 0,1 mmol/g, 0,2 mmol/g, 0,5 mmol/g, 1,0 mmol/g, 1,5 mmol/g und 2 mmol/g). Von diesen Lösungen wurden die IR-Spektren aufgenommen. Die Peakflächen (PA) der Carbodiimidbande bei ca. 2118 cm-1 werden ermittelt. Aus den Daten (Konzentration c der DCC-Lösungen und den ermittelten PA) wird eine Kalibriergerade erstellt:

$$\text{PA} = m \cdot c\ \text{[meq DCC/g]},$$

wobei m die Steigung der Kalibriergeraden darstellt.

Falls die in der in der Komponente B) einzusetzenden Polycarbodiimide als wässrige Dispersion vorliegen, wird die wässrige Dispersion direkt in der ATR-Infrarotspektroskopie untersucht. Die Bestimmung der Carbodiimid-Konzentration erfolgt über PA der Bande bei ca. 2118 cm-1. Die Carbodiimidkonzentration c der wässrigen Dispersion [meq DCC/g] wird gemäß der Formel PA/m berechnet. Daraus kann unter Berücksichtigung des nichtflüchtigen Anteils der Dispersion die Carbodiimidkonzentration c) des Polycarbodimides berechnet werden. Aus der Carbodiimidkonzentration der Komponente B) und der Masse der Komponente B) Mc wird die Stoffmenge an Carboddimidgruppen nCDI [meq DCC] ermittelt.

nCDI [meq DCC] = Mc [g] x c [meg DCC /g]Im Falle von als Feststoff vorliegenden Carbodiimiden wird die Carbodiimidkonzentration wie in der WO2020216680A1 beschrieben an einer 25%igen Lösung in Toluol ermittelt und auf den Feststoff umgerechnet.

Das Verhältnis von Carbodiimidgruppen in der Komponente (B) zu den Carbonsäuregruppen in der Komponente (A) für das Beispiel 2 in Tabelle 1 wird wie folgt berechnet.

$$\text{nCOOH} = 10\ \text{[mg KOH / g ] x 40\% x 100 g / 56,1 [mmol / mg KOH]} = 7{,}13\ \text{mmol}$$

$$\text{nCDI [meq DCC]} = 14{,}3\ \text{[g] x 40\% x 3,5 [meq DCC / g]} = 20{,}02\ \text{[meq DCC]}$$

Das Verhältnis von Carbodiimidgruppen in der Komponente (B) zu den Carbonsäuregruppen in der Komponente (A) für das Beispiel 2 ist 20,02 zu 7,13 bzw. 2,8 : 1.

*Bestimmung der Wärmebeständigkeit durch eine Softening Point Messung (Zugscherbelastung)*

Die Bestimmung der Softening Point-Werte erfolgte an einer Canvas- Canvas Verbundkombination.

Auf die Prüfkörper (25 mm x 50 mm) aus Baumwollgewebe werden die Klebstoffdispersionen mit einem Pinsel aufgetragen, sodass sich 20 mm x 10 mm große Klebeflächen ergeben.

Die Klebstoffschicht wird für 30 min. bei 23°C / 50% relativer Luftfeuchte getrocknet. Dann wird eine zweite Klebstoffschicht mit dem Pinsel aufgetragen. Anschließend wird für weitere 60 min. bei 23°C / 50% relativer Luftfeuchte getrocknet. Die mit Klebstoff beschichteten Prüfkörper werden für 10 Sekunden mit dem IR-Strahler der Fa. Funck (Schockaktiviergerät 2000) wärmeaktiviert. Die Temperatur der Oberfläche der Klebstoffschicht steigt dabei auf ca. 90°C an. Die Herstellung der Klebeverbindung erfolgt unmittelbar nach der Wärmeaktivierung, indem die aktivierten Klebstoffschichten gegeneinander für 1 min. in einer Presse bei 4 bar verpresst werden. Die so hergestellten Prüfkörper werden 1 Woche im Normklima (23°C / 50% relativer Luftfeuchte ) gelagert.

Nach der Lagerung werden die Prüfkörper mit 4 kg belastet (Zugscherbelastung) und in einem Heizschrank innerhalb von 30 min. auf 40°C temperiert. Anschließend werden die Prüfkörper mit einer linearen Heizrate von 0,5K/min. bis auf 150°C aufgeheizt. Die Erweichungstemperatur, d.h. die Temperatur in °C bei der die Klebeverbindung unter der Last von 4 kg versagt, wird registriert (= Softening-Pont). Es werden jeweils 5 Einzelmessungen durchgeführt und der Mittelwert bestimmt und angegeben.

*Bestimmung der Wärmebeständigkeit nach Lagerung durch eine Softening Point Messung (= Zugscherbelastung) zur Bestimmung der offenen Zeit der getrockneten Klebstoffschicht*

Die Bestimmung der Softening Point-Werte erfolgte an einer Canvas- Canvas Verbundkombination.

Auf die Prüfkörper (25 mm x 50 mm) aus Baumwollgewebe werden die Klebstoffdispersionen mit einem Pinsel aufgetragen, sodass sich 20 mm x 10 mm große Klebeflächen ergeben. Die Klebstoffschicht wird 30 min. bei 23°C / 50% relative Luftfeuchte getrocknet. Dann wird eine zweite Klebstoffschicht mit dem Pinsel aufgetragen. Die Klebstoffschicht wird 30 min. bei 23°C / 50% relativer Luftfeuchtegetrocknet. Dann wird eine zweite Klebstoffschicht mit dem Pinsel aufgetragen. Anschließend wird für weitere 60 min. bei 23°C / 50% relativer Luftfeuchte getrocknet.

Nach der Trocknung der Klebstoffschicht, werden die beschichteten Canvas-Substrate, vor der Wärmeaktivierung und Fügung, für unterschiedliche Zeiträume (Stunden bis Wochen) im Normklima (23°C / 50% relativer Luftfeuchte) gelagert. Die offene Zeit ist die maximale Lagerdauer, nach der mit der im Folgenden beschriebenen Messmethode noch ein Softening Point von 100 °C oder höher erreicht wird.

Die mit Klebstoff beschichteten Prüfkörper werden für 10 Sekunden mit dem IR-Strahler der Fa. Funck (Schockaktiviergerät 2000) wärmeaktiviert. Die Temperatur der Oberfläche der Klebstoffschicht steigt dabei auf ca. 90°C an. Die Herstellung der Klebeverbindung erfolgt unmittelbar nach der Wärmeaktivierung, indem die aktivierten Klebstoffschichten gegeneinander für 1 min. in einer Presse bei 4 bar verpresst werden. Die so hergestellten Prüfkörper werden 1 Woche im Normklima (23°C / 50% relativer Luftfeuchte) gelagert.

Nach der Lagerung werden die Prüfkörper mit 4 kg belastet und in einem Heizschrank innerhalb von 30 min. auf 40°C temperiert. Anschließend werden die Prüfkörper mit einer linearen Heizrate von 0,5K/min. auf 150°C aufgeheizt. Die Erweichungstemperatur, d.h. die Temperatur in °C bei der die Klebeverbindung unter der Last von 4 kg versagt, wird registriert (= Softening-Pont). Es werden jeweils 5 Einzelmessungen durchgeführt und der Mittelwert bestimmt und angegeben. (Figur 1)

*Test-Ergebnisse*

Tabelle 1: Testergebnisse

| Beispiel | 1 | 2 | 3 | 4 | 5 | 6 | 7 | 8 |
|---|---|---|---|---|---|---|---|---|
| Beispiel-Typ | V | E | V | V | E | E | E | E |
| Einsatzstoff | Einsatzmenge (g) | | | | | | | |
| Dispercoll U 2824 | 100 | 100 | | | | | | |
| Dispercoll U 2643 | | | 100 | 100 | | | | |
| Dispersion 1 | | | | | | 100 | | |
| Dispersion 2 | | | | | | | 100 | 100 |
| Desmodur 2802 | - | 14,3 | - | 14,3 | | 3,6 | 1,7 | 3,4 |

(fortgesetzt)

| Softening-Point nach Lagerung der vorbeschichteten Substrate bei 23°C/ 50% rH [°C]* (Fügung und Wärmeaktivierung nach Lagerung des getrockneten Klebstoffs für den angegeben Zeitraum) | | | | | | | | |
|---|---|---|---|---|---|---|---|---|
| Unmittelbar nach Trocknung | 49 | 150 | 51 | 146 | 150 | 150 | 150 | 150 |
| nach 1 Stunde Lagerung | - | - | - | 110 | 150 | 150 | 150 | 150 |
| nach 3 Stunden Lagerung | - | - | - | 97 | 150 | 150 | 150 | 150 |
| nach 5 Stunden Lagerung | - | - | - | 90 | 150 | 150 | 150 | 150 |
| nach 24 Stunden Lagerung | - | - | - | 62 | 150 | 150 | 150 | 150 |
| nach 48 Stunden Lagerung | - | - | - | - | 150 | 150 | 150 | 150 |
| nach 1 Woche Lagerung | - | 147 | - | - | 150 | 150 | 150 | 150 |
| nach 2 Wochen Lagerung | - | 147 | - | - | 150 | 148 | 150 | 150 |
| nach 3 Wochen Lagerung | - | 120 | - | - | 150 | 147 | 150 | 150 |
| nach 4 Wochen Lagerung | - | 93 | - | - | 150 | 143 | 150 | 150 |
| nach 6 Wochen Lagerung | - | 71 | - | - | 150 | 140 | 150 | 147 |
| nach 8 Wochen Lagerung | - | 61 | - | - | 150 | 139 | 150 | 146 |

Erfindungsgemäße Beispiele sind mit E, Vergleichsbeispiele mit V gekennzeichnet.

Die Ergebnisse aus Tabelle 1 zeigen, dass im Falle des erfindungsgemäßen Beispieles 2 basierend auf einer teilkristallinen Carboxylgruppen enthaltenden Polyurethandispersion latent reaktive Klebstofffilme erhalten werden, die sich auch nach mehrwöchiger Lagerung noch dazu eignen nach Wärmeaktivierung zu Klebverbunden mit hoher Wärmebeständigkeit (Softening Point) verarbeitet werden zu können.

Es zeigt sich in den Vergleichsbeispielen 1, 3 dass Carboxylgruppen enthaltende Polyurethane ohne Einsatz von Polycarbodiimiden nicht zu ausreichenden Wärmebeständigkeiten der Klebverbindungen führen.

Es zeigt sich anhand des Vergleichsbeispiels 4, dass eine Kombination von einer nicht kristallinen Carboxylgruppen enthaltenden Polymerdispersion mit einem Polycarbodiimid bei unmittelbarer Wärmeaktivierung zwar zu Klebverbindungen führt, die eine ausreichende Wärmebeständigkeit haben, jedoch zeigen die Klebstofffilme keine ausreichende offene Zeit bei Lagerung unter Standardbedingungen. Bereits nach 3h ist die Vernetzung der Klebstofffilme soweit fortgeschritten, dass beim Fügeprozess keine Klebverbindung mit ausreichender Wärmebeständigkeit mehr erreicht wird. Offensichtlich verfügen die bereits vernetzten Polymere bei der gewählten Aktiviertemperatur von 90 °C nicht mehr über eine ausreichende Klebrigkeit verfügen um miteinander eine wärmebeständige Klebverbindung einzugehen.

## Patentansprüche

**1.** Verwendung einer wässrigen Dispersion zur Herstellung von lagerstabilen und latent-reaktiven Klebstoffen, wobei die wässrige Dispersion mindestens die folgenden dispergierten Komponenten enthält:

(A) mindestens ein teilkristallines oder kristallines Carboxylgruppen enthaltendes Polyurethanpolymer, welches eine Schmelztemperatur im Bereich von 35 bis 80 °C, eine Schmelzenthalpie von ≥ 15 J/g, jeweils bestimmt mittels DSC (differential scanning calometry) bei einer Aufheizrate von 20 K/min gemäß DIN EN ISO 11357-1:2017 (2017-02), und eine partielle Säurezahl im Bereich von 0,8 mg KOH / g bis 25 mg KOH /g, bestimmt gemäß DIN EN ISO 2114:2000 (2002-06, Verfahren A mit einem Aceton-Ethanol-Lösungsmittelgemisch), aufweist;

(B) mindestens ein Polycarbodiimid, mindestens ein Polyaziridin und/oder eine Mischung davon, wobei das mindestens eine Polycarbodiimid und das mindestens eine Polyaziridin eine Glasübergangstemperatur im Bereich von -150 °C bis 30 °C aufweisen, bestimmt gemäß DSC (differential scanning calometry) DIN EN ISO 11357-1 (2017-02);

(C) gegebenenfalls mindestens ein weiteres Polymer, welches von dem mindestens einen Polymer (A) verschieden ist; und

(D) gegebenenfalls mindestens einen Zusatzstoff der von den Komponenten (A), (B) und (C) verschieden ist.

2. Verfahren zum Verbinden von mindestens zwei Substraten oder mindestens zwei Oberflächenbereichen eines Substrates, umfassend mindestens die Schritte

(i) Bereitstellen einer wässrigen Dispersion enthaltend mindestens die folgenden dispergierten Komponenten:

(A) mindestens ein teilkristallines oder kristallines Carboxylgruppen enthaltendes Polyurethanpolymer, welches eine Schmelztemperatur im Bereich von 35 bis 80 °C, eine Schmelzenthalpie von ≥ 15 J/g, jeweils bestimmt mittels DSC (differential scanning calometry) bei einer Aufheizrate von 20 K/min gemäß DIN EN ISO 11357-1:2017 (2017-02), und eine partielle Säurezahl im Bereich von 0,8 mg KOH / g bis 25 mg KOH /g, bestimmt gemäß DIN EN ISO 2114:2000 (2002-06, Verfahren A mit einem Aceton-Ethanol-Lösungsmittelgemisch), aufweist;
(B) mindestens ein Polycarbodiimid, mindestens ein Polyaziridin und/oder eine Mischung davon, wobei das mindestens eine Polycarbodiimid und das mindestens eine Polyaziridin eine Glasübergangstemperatur im Bereich von -150 °C bis 30 °C aufweisen bestimmt gemäß DSC (differential scanning calometry) DIN EN ISO 11357-1 (2017-02);
(C) gegebenenfalls mindestens ein weiteres Polymer, welches von dem mindestens einen Polymer (A) verschieden ist; und
(D) gegebenenfalls mindestens einen Zusatzstoff der von den Komponenten (A), (B) und (C) verschieden ist,

(ii) Applizieren der wässrigen Dispersion aus Schritt (i) auf mindestens einem Teil mindestens einer Oberfläche bzw eines Oberflächenbereichs des mindestens einen Substrates, oder auf ein geeignetes Trägermedium zur Herstellung von selbstragenden Klebstofffilmen,
(iii) Trocknen der vorhandenen mindestens einen Dispersion aus Schritt (ii), um mindestens eine lagerstabile und latent-reaktive Klebstoffschicht oder einen lagerstabilen und latent-reaktiven selbsttragenden Klebstofffilm zu erhalten,
(iv) Lagern des mindestens einen Substrats oder des selbsttragenden Klebstofffilmes aus Schritt (iii) für einen Zeitraum von mindestens 8 Stunden, vorzugsweise von 8 Stunden bis 2400 Stunden, besonders bevorzugt von 8 Stunden bis 168 Stunden, bei einer Temperatur im Bereich von -40 °C bis 30 °C, und
(v) Inkontaktbringen der mindestens einen lagerstabilen und latent-reaktiven Klebstoffschicht mit mindestens einem weiteren Oberflächenbereich des mindestens einen Substrats, mit mindestens einem Teil eines weiteren Substrats oder mit mindestens einem Teil einer auf einem weiteren Substrat vorhandenen Klebstoffschicht, bei einer Temperatur im Bereich von 40 °C bis 200°C, bevorzugt von 50 bis 120 °C, besonders bevorzugt von 55 bis 100 °C oder Inkontaktbringen des selbsttragenden Klebstofffilmes mit mindestens zwei Substraten bei einer Temperatur im Bereich von 40 °C bis 200°C, bevorzugt von 50 bis 120 °C, besonders bevorzugt von 55 bis 100 °C.

3. Verwendung nach Anspruch 1, wobei die lagerstabilen und latent-reaktiven Klebstoffe lagerstabile und latent-reaktive Klebstoffschichten, selbsttragende, lagerstabile und latent-reaktive Klebstofffilme und / oder lagerstabile und latent-reaktive Klebstoffpulver sind, vorzugsweise wobei die Klebstoffschichten und / oder Klebstofffilme auf einem Substrat vorliegen, wobei das Substrat vorzugsweise ausgewählt ist aus der Gruppe bestehend aus Holz, Papier, thermoplastischen Kunststoffen, elastomeren Kunststoffen, thermoplastisch-elastomeren Kunststoffen, Vulkanisaten, textilen Geweben, Gewirken, Geflechten, Leder, Metallen, Keramik, Asbestzement, Steinzeug, Beton, Schaumstoffen und / oder Kombinationen aus mindestens zweien hiervon.

4. Verwendung nach einem der Ansprüche 1 oder 3 oder Verfahren nach Anspruch 2, wobei die Klebstoffe und / oder die Klebstoffschicht eine Lagerstabilität von mehr als 14 Tagen vorzugsweise mehr als 28 Tagen, besonders bevorzugt eine Lagerstabilität im Bereich von 14 Tagen bis 365 Tagen bei einer Temperatur von 23 °C aufweisen.

5. Verwendung nach einem der Ansprüche 1, 3 oder 4 oder Verfahren nach einem der Ansprüche 2 oder 4, wobei die Klebstoffe und / oder die Klebstoffschicht eine Schmelzenthalpie von ≥ 15 J/g, vorzugsweise im Bereich von 15 J/g bis 100 J/g, besonders bevorzugt im Bereich von 20 J/g bis 60 J/g aufweist, bestimmt mittels DSC (differential scanning calometry) DIN EN ISO 11357-1 (2017-02).

6. Verwendung nach einem der Ansprüche 1 oder 3 bis 5 oder Verfahren nach einem der Ansprüche 2, 4 oder 5, wobei das mindestens eine Polyurethanpolymer (A) ein durchschnittliches Molekulargewicht (Mw) im Bereich von 20.000 g/mol bis 300.000 g/mol, vorzugsweise im Bereich von 20.000 g/mol bis 200.000 g/mol, besonders bevorzugt im Bereich von 20.000 g/mol bis 100.000 g/mol, noch bevorzugter im Bereich von 40.000 g/mol bis 80.000 g/mol aufweist, bestimmt gemäß DIN EN ISO 13885-2 (2021-11) mit N,N-Dimethlyacetamid als Eluent und Polystyrol als Standard.

7. Verwendung nach einem der Ansprüche 1 oder 3 bis 6 oder Verfahren nach einem der Ansprüche 2, oder 4 bis 6, wobei das Polyurethanpolymer (A) eine partielle Säurezahl im Bereich von 2,5 mg KOH / g bis 25 mg KOH /g, vorzugsweise im Bereich von 2,5 mg KOH / g bis 12,5 mg KOH /g bestimmt gemäß DIN EN ISO 2114:2000 (2002-06, Verfahren A mit einem Aceton-Ethanol-Lösungsmittelgemisch), aufweist.

8. Verwendung nach einem der Ansprüche 1 oder 3 bis 7 oder Verfahren nach einem der Ansprüche 2 oder 4 bis 7, wobei das Polyurethanpolymer (A) erhältlich ist oder erhalten wird durch die Umsetzung der folgenden Komponenten:

(A1) mindestens einer Diol- und/oder Polyolkomponente;
(A2) mindestens einer Di- und/oder Polyisocyanatkomponente;
(A3) mindestens einer isocyanatreaktive Komponente, die mindestens eine freie Carboxygruppe aufweist, wobei bevorzugt die isocyanatreaktive Komponente bis zu zwei Aminound/oder Hydroxylgruppen und eine freie Carboxygruppe aufweist, wobei die isocyanatreaktive Komponente (A3) verschieden von den Komponenten (A1), (A2), (A4) und (A5) ist;
(A4) optional mindestens eine neutralisierte Sulfonsäuregruppe aufweisende Komponente, welche isocyanatreaktive Gruppen aufweist, wobei bevorzugt die isocyanatreaktive Gruppen bis zu zwei Amino- und/oder Hydroxylgruppen sind, wobei die Komponente (A4) verschieden von den Komponenten (A1), (A2), (A3) und (A5) ist;
(A5) optional mindestens eine Komponente ist ausgewählt aus der Gruppe bestehend aus einer mono-amino-funktionellen Verbindung, di-amino-funktionellen Verbindung, tri-amino-funktionellen Verbindung, und / oder einer Mischung aus mindestens zwei davon, wobei die Komponente (A5) verschieden von den Komponenten (A1), (A2), (A3) und (A4) ist.

9. Verwendung nach Anspruch 8 oder Verfahren nach Anspruch 8, wobei

(A1) wenigstens ein difunktionelles, teilkristallines oder kristallines, aliphatisches Polyesterpolyol mit einem Molekulargewicht (Mn) im Bereich von 400 bis 6000 g/mol ist, bestimmt gemäß DIN EN ISO 13885-1 (2021-11) mit Tetrahydrofuran als Eluent und Polystyrol als Standard;
(A2) wenigstens ein Diisocyanat ist ausgewählt aus der Gruppe bestehend aus Hexamethylendiisocyanat (HDI), 1-Isocyanato-3,3,5-trimethyl-5-isocyanatomethyl-cyclohexan (IPDI), Toluol-2,4-diisocyanat (TDI), Pentamethylendiisocyanat (PDI) und / oder einer Mischung aus mindestens zwei davon;
(A3) wenigstens eine isocyanatreaktive Komponente ist ausgewählt aus der Gruppe bestehend aus Aminocarbonsäuren, Hydroxycarbonsäuren und / oder einer Mischung aus mindestens zwei davon, vorzugsweise ausgewählt aus der Gruppe bestehend aus Dimethylolpropionsäure, Dimethylolbuttersäure, Lysin und / oder einer Mischung aus mindestens zwei davon;
(A4) optional das Natriumsalz der N-(2-Aminoethyl)-2-aminoethansulfonsäure ist;
(A5) optional eine Komponente ist ausgewählt aus der Gruppe bestehend aus Monoethanolamin, Diethanolamin, Hydroxyethylethandiamin und / oder einer Mischung aus mindestens zwei davon.

10. Verwendung nach einem der Ansprüche 8 oder 9 oder Verfahren nach einem der Ansprüche 8 oder 9, wobei das Polyurethanpolymer (A)

20 Gew.-% bis 94 Gew.-%, vorzugsweise 20 Gew.-% bis 90 Gew.-%, der Komponente A1;
5 Gew.-% bis 65 Gew.-%, vorzugsweise 5 Gew.-% bis 60 Gew.-%, der Komponente A2;
0,25 Gew.-% bis 15 Gew.-%, vorzugsweise 0,25 Gew.-% bis 10 Gew.-%, der Komponente A3;
0 Gew.-% bis 10 Gew.-%, vorzugsweise 0,5 Gew.-% bis 8 Gew.-%, der Komponente A4;
0 Gew.-% bis 10 Gew.-% der Komponente A5, enthält
wobei die Summe der Bestandteile (A1), (A2), (A3), (A4) und (A5) 100 Gew.-% ergibt.

11. Verwendung nach einem der Ansprüche 1 oder 3 bis 10 oder Verfahren nach einem der Ansprüche 2 oder 4 bis 10, wobei die wässrige Dispersion eine partielle Säurezahl im Bereich von 0,5 mg KOH / g bis 10 mg KOH /g, vorzugsweise im Bereich von 1,0 mg KOH / g bis 10 mg KOH /g, besonders bevorzugt im Bereich von 2 mg KOH / g bis 6 mg KOH /g aufweist, bestimmt gemäß DIN EN ISO 2114:2000 (2002-06, Verfahren A mit einem Aceton-Ethanol-Lösungsmittelgemisch).

12. Verwendung nach einem der Ansprüche 1 oder 3 bis 11 oder Verfahren nach einem der Ansprüche 2 oder 4 bis 11, wobei Komponente (B) mindestens ein Polycarbodiimid ist und bevorzugt ein durchschnittliches Molekulargewicht (Mw) im Bereich von 500 g/mol bis 100.000 g/mol, besonders bevorzugt im Bereich von 1.000 g/mol bis 50.000 g/mol,

noch bevorzugter im Bereich von 2.000 g/mol bis 20.000 g/mol, noch mehr bevorzugter im Bereich von 2.000 g/mol bis 5.000 g/mol aufweist, bestimmt gemäß DIN EN ISO 13885-1 (2021-11) mit Tetrahydrofuran als Eluent und Polystyrol als Standard.

**13.** Verwendung nach einem der Ansprüche 1 oder 3 bis 12 oder Verfahren nach einem der Ansprüche 2 oder 4 bis 12, wobei das mindestens eine Polycarbodiimid einen Gehalt an Carbodiimidgruppen (-N=C=N-) im Bereich von 0,5 mmol/g bis 5 mmol/g, bestimmt durch ATR-Infrarotspektroskopie gegen einen Dicyclocarbodiimid-Standard aufweist, bezogen auf das Gesamtgewicht des mindestens einen Polycarbodiimids.

**14.** Verwendung nach einem der Ansprüche 1 oder 3 bis 13 oder Verfahren nach einem der Ansprüche 2 oder 4 bis 13, wobei das molare Verhältnis von Carbodiimidgruppen (-N=C=N-) zu Carboxylgruppen (-COOH) in der Komponente A im Bereich von 0,2:1 bis 5:1, bevorzugt im Bereich von 0,5:1 bis 2,9: 1, ist.

**15.** Verwendung nach einem der Ansprüche 1 oder 3 bis 14 oder Verfahren nach einem der Ansprüche 2 oder 5 bis 15, wobei die wässrige Dispersion

40 Gew.-% bis 99,5 Gew.-%, vorzugsweise 70 Gew.-% bis 98,5 Gew.-%, der Komponente (A),
0,5 Gew.-% bis 40 Gew.-%, vorzugsweise 1,5 Gew.-% bis 30 Gew.-%, der Komponente (B), und
0 Gew.-% bis 50 Gew.-%, vorzugsweise 0 Gew.-% bis 28,5 Gew.-%, der Komponente (C), enthält und sich die Mengenanteile von (A), (B) und (C) zu 100 Gew.-% addieren.

**16.** Klebstoffverbund, umfassend mindestens zwei Substrate und einen/eine zwischen jeweils den mindestens zwei Substraten vorhandenen Klebstoff oder Klebstoffschicht und / oder ein Substrat und einen/eine zwischen mindestens zwei Oberflächenbereichen des Substrats vorhandenen Klebstoff oder Klebstoffschicht, erhalten gemäß einem der Ansprüche 1 bis 15.

Europäisches Patentamt
European Patent Office
Office européen des brevets

# EUROPÄISCHER RECHERCHENBERICHT

Nummer der Anmeldung
EP 23 17 5389

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | WO 2020/216680 A1 (COVESTRO INTELLECTUAL PROPERTY GMBH & CO KG [DE]) 29. Oktober 2020 (2020-10-29) * Ansprüche 1-17; Beispiele 8-13,16-21 * ----- | 1-16 | INV. C08G18/12 C08G18/08 C08G18/28 C08G18/32 C08G18/34 C08G18/42 C08G18/72 C08G18/79 C08L75/02 C08L75/04 C08L75/06 C09J175/02 C09J175/06 |
| X | WO 2017/114835 A1 (COVESTRO DEUTSCHLAND AG [DE]; COVESTRO POLYMERS CO LTD [CN]) 6. Juli 2017 (2017-07-06) * Seite 21; Ansprüche 1-15; Beispiele 1-6; Tabelle 1 * ----- | 1-16 | |
| | | | RECHERCHIERTE SACHGEBIETE (IPC) |
| | | | C08G C08L C09J |

Der vorliegende Recherchenbericht wurde für alle Patentansprüche erstellt

1

| Recherchenort | Abschlußdatum der Recherche | Prüfer |
|---|---|---|
| München | 19. Oktober 2023 | Scheuer, Sylvie |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

# ANHANG ZUM EUROPÄISCHEN RECHERCHENBERICHT ÜBER DIE EUROPÄISCHE PATENTANMELDUNG NR.

EP 23 17 5389

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

19-10-2023

| Im Recherchenbericht angeführtes Patentdokument | Datum der Veröffentlichung | Mitglied(er) der Patentfamilie | Datum der Veröffentlichung |
|---|---|---|---|
| WO 2020216680 A1 | 29-10-2020 | CN 113710717 A | 26-11-2021 |
| | | EP 3730528 A1 | 28-10-2020 |
| | | EP 3959251 A1 | 02-03-2022 |
| | | JP 2022530013 A | 27-06-2022 |
| | | KR 20220005459 A | 13-01-2022 |
| | | US 2022177751 A1 | 09-06-2022 |
| | | WO 2020216680 A1 | 29-10-2020 |
| WO 2017114835 A1 | 06-07-2017 | CN 106916273 A | 04-07-2017 |
| | | EP 3397668 A1 | 07-11-2018 |
| | | ES 2839276 T3 | 05-07-2021 |
| | | TW 201738286 A | 01-11-2017 |
| | | US 2019010272 A1 | 10-01-2019 |
| | | WO 2017114835 A1 | 06-07-2017 |

EPO FORM P0461

Für nähere Einzelheiten zu diesem Anhang : siehe Amtsblatt des Europäischen Patentamts, Nr.12/82

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- US 4870129 A
- EP 3730528 A1
- EP 0922720 A
- WO 2020035573 A1
- EP 1600485 A
- EP 2099840 A
- WO 2008071307 A
- EP 3502157 A1
- EP 2186841 A1
- EP 3795601 A1
- EP 2552982 A2
- WO 2020216680 A1